# EUROPÄISCHE PATENTSCHRIFT

(11) **EP 3 036 124 B1**
(45) Veröffentlichungstag und Bekanntmachung des Hinweises auf die Patenterteilung: **14.06.2017**
(21) Anmeldenummer: 14741207.6
(22) Anmeldetag: 19.07.2014
(51) Int. Cl.: G08G 1/16, B60K 28/06, B60W 10/04, B60W 10/10, B60W 10/18, B60W 10/20, B60W 30/09, B60W 30/095

(54) **KRAFTFAHRZEUG UND VERFAHREN ZUR STEUERUNG EINES KRAFTFAHRZEUGS**
DEVICE AND METHOD FOR CONTROLLING A MOTOR VEHICLE
VÉHICULE AUTOMOBILE ET PROCÉDÉ PERMETTANT DE COMMANDER UN VÉHICULE AUTOMOBILE

(30) Priorität: 20.08.2013 DE 102013013867
(43) Veröffentlichungstag der Anmeldung: 29.06.2016
(73) Patentinhaber: Audi AG, 85045 Ingolstadt (DE)
(72) Erfinder: DANZL, Martin, 83115 Neubeuern (DE); WÜST, Sabine, 85051 Ingolstadt (DE); GOLLEWSKI, Thorsten, 85080 Gaimersheim (DE); KIENZL, Georg, 85055 Ingolstadt (DE); HAGEMANN, Franz-Michael, 85120 Hepberg (DE); SIEDERSBERGER, Karl-Heinz, 86669 Königsmoos (DE); MIEHLING, Thomas, 85057 Ingolstadt (DE); KUNSCH, Peter, 85123 Karlskron (DE)
(74) Vertreter: Thielmann, Frank
(86) Internationale Anmeldenummer: PCT/EP2014/001971
(87) Internationale Veröffentlichungsnummer: WO 2015/024616

(56) Entgegenhaltungen:
- WO-A1-02/08010
- DE-A1-102011 103 610
- DE-A1-102011 111 895
- US-B1- 8 260 482

## Beschreibung

Die Erfindung betrifft ein Kraftfahrzeug, umfassend wenigstens ein Fahrerassistenzsystem zur Vorausberechnung zukünftiger Fahrsituationen des Kraftfahrzeugs für ein vorgegebenes Zeitintervall durch Auswertung von das Kraftfahrzeug betreffenden Egodaten und das Kraftfahrzeugumfeld betreffenden Umfelddaten, wobei das Kraftfahrzeug in einem ersten Betriebsmodus des Fahrerassistenzsystems durch einen Fahrer steuerbar ist.

Moderne Kraftfahrzeuge weisen eine Vielzahl von Fahrerassistenzsystemen auf, die der Steigerung der Fahrsicherheit und/oder des Fahrkomforts dienen. Insbesondere sind Fahrerassistenzsysteme bekannt, die abhängig von einem Ist-Zustand des Kraftfahrzeugs in die Steuerung der Kraftfahrzeugsysteme eingreifen, wie beispielsweise Antiblockiersysteme oder Spurstabilisierungssysteme. Daneben sind Komfortsysteme wie Spurhalteassistenzsysteme oder automatische Abstandsregelungen bekannt, die aus Egodaten und Umfelddaten eines Kraftfahrzeugs Voraussagen über künftige Fahrsituationen berechnen und das Kraftfahrzeug entsprechend dieser Voraussagen steuern. Es ist bekannt, dass diese teilautonomen Steuersysteme Steueraufgaben häufig mit einer geringeren Reaktionszeit und einer höheren Genauigkeit durchführen als ein menschlicher Fahrer. Damit kann ein autonomer Fahrbetrieb in vielen Fahrsituationen zu einem verbesserten Fahrverhalten des Fahrzeugs gegenüber einer Steuerung durch einen menschlichen Fahrer führen. Ein derartiges Fahrerassistenzsystem ist aus dem gattungsbildenden Dokument WO 02/08010 A1 bekannt. Um die Vorteile der schnelleren und genaueren Steuerung des Kraftfahrzeugs bei einem autonomen Fahrbetrieb zur Verbesserung der Sicherheit zu nutzen, ist es bekannt, Systeme einzusetzen, die drohende Kollisionen mit weiteren Kraftfahrzeugen erkennen und versuchen, diese Kollisionen zu vermeiden beziehungsweise die Auswirkungen der Kollisionen zu verringern.

Hierzu wird in den Fahrbetrieb eingegriffen, um das Kraftfahrzeug kontrolliert zum Stillstand zu bringen. Nachteilig ist hierbei, dass die erreichte Position des Kraftfahrzeugs häufig nicht ideal ist, wobei das zum Stillstand gebrachte Kraftfahrzeug ein Hindernis für weitere Verkehrsteilnehmer darstellt. Zudem ist es wünschenswert, autonome Fahreingriffe auch in anderen Fahrsituationen zu nutzen, um ein insgesamt verbessertes Fahrverhalten des Kraftfahrzeugs in kritischen Situationen zu erreichen, ohne die Handlungsfreiheit des Fahrers unnötig einzuschränken.

Der Erfindung liegt daher damit die Aufgabe zugrunde ein Kraftfahrzeug anzugeben, dessen Fahrverhalten in kritischen Fahrsituationen verbessert ist.

Zur Lösung dieser Aufgabe ist bei einem Kraftfahrzeug der eingangs genannten Art erfindungsgemäß vorgesehen, dass dessen Fahrassistenzsystem bei Erfüllung einer zumindest von den zukünftigen Fahrsituationen abhängenden Umschaltbedingung zum temporären Umschalten in einen zweiten Betriebsmodus, in dem die Steuerung des Kraftfahrzeugs ohne Eingriffsmöglichkeit durch den Fahrer autonom durch das Fahrerassistenzsystem erfolgt, ausgebildet ist, wobei im zweiten Betriebsmodus der Fahrbetrieb fortgesetzt wird.

Der Erfindung liegt die Idee zugrunde, einem Fahrer im "normalen" Fahrbetrieb die größtmögliche Handlungsfreiheit zu lassen, jedoch kritische Situationen im Fahrbetrieb prädiktiv zu erkennen und bei Vorliegen einer solchen Fahrsituation rechtzeitig in den Fahrbetrieb einzugreifen, mit dem Ziel, den Fahrbetrieb möglichst auch nach der kritischen Situation nahtlos fortsetzen zu können. Kommt es zu einem solchen Eingriff, so erfolgt zumindest die Steuerung des Kraftfahrzeugs vollständig autonom, das heißt ohne Eingriffsmöglichkeit durch den Fahrer. Insbesondere kann im zweiten Betriebsmodus auch eine vollständig autonome Längs- und Querführung des Kraftfahrzeugs erfolgen. Durch diese vollständig vom Fahrer unabhängige Steuerung zumindest der Steuerung des Kraftfahrzeugs können die Vorteile der autonomen Steuerung, insbesondere eine kürzere Reaktionszeit und eine exaktere Steuerung, genutzt werden. Im zweiten Betriebsmodus des Fahrerassistenzsystems erfolgt keine Bremsung des Kraftfahrzeugs bis zum Stillstand, vielmehr wird der Fahrbetrieb zu einem vorausliegenden Wegpunkt fortgesetzt. So kann durch das Fahrerassistenzsystem beispielsweise ein Punkt bestimmt werden, an dem voraussichtlich keine Umschaltbedingung mehr vorliegt, also ein Punkt, der jenseits eines kritischen Bereichs liegt, in dem die Umschaltbedingung erfüllt ist.

Die Umschaltbedingung kann so gewählt werden, dass sie erfüllt wird, wenn Fahrsituationen prognostiziert sind, die einen Fahrbetrieb im physikalischen Grenzbereich oder nahe am physikalischen Grenzbereich des Kraftfahrzeugs erfordern. Häufig ist es jedoch vorteilhaft, die Umschaltbedingung derart zu wählen, dass ein Umschalten in den zweiten Betriebsmodus bereits dann erfolgt, wenn davon auszugehen ist, dass ein Fahrer die prognostizierte Fahrsituation nicht zuverlässig beherrscht. Es ist insbesondere möglich, dass die Umschaltbedingung von einer Eigenschaft des Fahrers abhängig ist. Damit kann im erfindungsgemäßen Kraftfahrzeug das Fahrerassistenzsystem in Situationen eingreifen, in denen ein Fahrer das Kraftfahrzeug nicht mehr zuverlässig und komfortabel beherrschen kann, autonome Eingriffe jedoch die Fortsetzung des Fahrbetriebs noch erlauben.

Der zweite Betriebsmodus des Fahrassistenzsystems wird also insbesondere dann aktiviert, wenn das Kraftfahrzeug im (physikalischen oder bevorzugt fahrerindividuellen) Grenzbereich bewegt wird oder wenn plötzlich unerwartete Verkehrssituationen auftreten. Um solche Situationen zu erkennen, sammelt das Fahrerassistenzsystem Egodaten und Umfelddaten, die durch verschiedene Einrichtungen des Kraftfahrzeugs zur Verfügung gestells werden können. Zur Prognose, ob eine Umschaltbedingung erfüllt ist, also ob insbesondere eine kritische Fahrsituation zu erwarten ist, kann eine Vielzahl von Informationen genutzt werden. Insbesondere können die Egodaten Informationen über Kraftfahrzeugkomponenten, insbesondere den Motor, die Bremsen und/oder die Reifen umfassen. So kann das Fahrverhalten des Kraftfahrzeugs besonders gut vorausgesagt werden, indem ein Reibungskoeffizient zwischen Reifen und Fahrbahn abgeschätzt werden kann. Hierzu können direkt Reibungskoeffizienten ermittelt oder vorgegeben werden, die Reibungskoeffizienten können aber auch aus weiteren Informationen über den Reifen, wie beispielsweise Fahrleistung, Typ, Luftdruck ermittelt werden. Bezüglich des Motors und der Bremsen sind insbesondere maximale Brems- und Beschleunigungsmomente wesentlich zur Ermittlung und Bewertung potentieller Fahrsituationen. Auch weitere Fahrzeugparameter, wie beispielsweise ein maximaler Lenkwinkel können als Komponenteninformationen ausgewertet werden.

Daneben können zeitlich veränderliche Informationen über das Kraftfahrzeug wie die Eigengeschwindigkeit und/oder ein Roll-, Nick- oder Gierwinkel und/oder die Masse und/oder der Ort des Schwerpunktes und/oder der Lenkwinkel wenigstens eines Rades und/oder die Winkelgeschwindigkeit wenigstens eines Rades des Kraftfahrzeugs erfasst und zur Prognose der zukünftigen Fahrsituationen genutzt werden.

Neben den Informationen über das Kraftfahrzeug selbst sind zur Prognose zukünftiger Fahrsituationen auch Daten über das Umfeld des Kraftfahrzeugs notwendig. Diese können insbesondere durch Nutzung von Sensoren am Kraftfahrzeug und/oder aus im Navigationssystem gespeicherten Informationen gewonnen werden. Vorteilhaft werden Daten über die Fahrbahn erfasst, beispielsweise wenigstens ein Kurvenradius und/oder eine lokale Fahrbahnsteigung und/oder eine lokale Fahrbahnneigung und/oder ein lokaler Reibungskoeffizient und/oder eine Fahrbahnbreite. Daneben sollten Informationen über potentielle Hindernisse wie andere Kraftfahrzeuge, Fußgänger und feststehende Hindernisse gewonnen werden. Dabei können für bewegte Hindernisse wie Kraftfahrzeuge und Fußgänger insbesondere auch Daten ermittelt werden, die eine Bewegungsprognose für diese Hindernisse ermöglichen. Verfahren und Vorrichtungen zur Gewinnung von Umfelddaten sind im Stand der Technik bekannt und werden daher nicht weiter diskutiert.

Ein wesentliches Merkmal des erfindungsgemäßen Kraftfahrzeugs ist, dass das Fahrerassistenzsystem im zweiten Betriebsmodus die Steuerung des Kraftfahrzeugs nur temporär autonom durchführt. Daher ist das Fahrerassistenzsystem im zweiten Betriebsmodus dazu ausgebildet, bei Vorliegen einer Rückschaltbedingung, die auch mehrere einzelne Bedingungen umfassen kann, vom zweiten Betriebsmodus in den ersten Betriebsmodus zurückzuschalten. Um sicherzustellen, dass der Fahrer aktiv die Kontrolle über das Kraftfahrzeug übernimmt, ist es vorteilhaft, bei Erfüllen der Rückschaltbedingung zunächst eine Übernahmeanforderung an den Fahrer auszugeben. So wird insbesondere ein optischer, akustischer oder haptischer Hinweis an den Fahrer gegeben, dass das Fahrerassistenzsystem bereit ist, die Führung des Kraftfahrzeugs wieder an den Fahrer abzugeben. Die tatsächliche Übernahme der Fahrzeugführung durch den Fahrer kann also erst erfolgen, nachdem der Fahrer die Rückübernahme der Fahrzeugführung durch eine Handlung bestätigt hat. Zudem soll bei der Rückübernahme ein Wiederankoppeln der Lenkradbewegung an die Lenkbewegung erfolgen. Daher muss bei der Übernahme der Lenkradwinkel gleich dem Lenkradwinkel sein, der dem momentanen Lenkwinkel entspricht.

Durch das temporäre Schalten in den zweiten Betriebsmodus des Fahrerassistenzsystems wird im erfindungsgemäßen Kraftfahrzeug erreicht, dass auch nach dem Eingreifen des Fahrerassistenzsystems eine normale Weiterfahrt möglich ist. Der Fahrbetrieb des Kraftfahrzeugs wird also durch das Eingreifen des Fahrerassistenzsystems nicht unterbrochen. Es ist damit eine kontinuierliche Fortbewegung des Kraftfahrzeugs während des Betriebs des Fahrerassistenzsystems im zweiten Betriebsmodus möglich. Da ein Stillstand des Kraftfahrzeugs vermieden wird, wird der Verkehrsfluss insgesamt weniger gestört als bei Sicherheitssystemen, die einen Stillstand des Kraftfahrzeugs herbeiführen. Zudem ist es durch die Fortführung des Fahrbetriebs möglich, die Belastung für den Fahrer zu verringern. Der Fahrer kann beim Betrieb des Fahrerassistenzsystems im zweiten Betriebsmodus zwar darauf hingewiesen werden, dass ein Eingriff des Fahrerassistenzsystems in den Fahrbetrieb erfolgt, insbesondere um den Fahrer darauf aufmerksam zu machen, dass er das Kraftfahrzeug nahe am physikalischen Grenzbereich oder voraussichtlich jenseits seines Komfortbereichs bewegt. Da plötzliche Bremsmanöver und der damit verbundene Schreck vermieden werden, wird die Fortsetzung der Fahrt jedoch für einen Großteil der Fahrer stark erleichtert.

Offensichtlich ist die im zweiten Betriebsmodus des Fahrerassistenzsystems erreichte Fortführung des Fahrbetriebs nur dann möglich, wenn das Fahrerassistenzsystem das Kraftfahrzeug sicher und zuverlässig durch die bevorstehende kritische Fahrsituation führen kann. In seltenen Fällen kann es jedoch möglich sein, dass eine sichere Fortsetzung des Fahrbetriebs nicht möglich ist. Für diese Situationen kann vorteilhaft ein weiterer Betriebsmodus des Fahrerassistenzsystems vorgesehen sein, um die Auswirkungen solcher Fahrsituationen zu minimieren.

Das Fahrerassistenzsystem kann dazu ausgebildet sein im zweiten Betriebsmodus eine Prognose, ob an einem in Fahrtrichtung voraus liegenden Wegpunkt die Umschaltbedingung erfüllt ist, zu berechnen und eine Zielposition für den autonomen Fahrbetrieb zu bestimmen, an der die Umschaltbedingung voraussichtlich nicht erfüllt ist. Wie erläutert, wird bei dem erfindungsgemäßen Verfahren der Fahrbetrieb aufrechterhalten, das heißt, das Fahrzeug wird weiterbewegt. Zur autonomen Bewegung des Kraftfahrzeugs ist es jedoch notwendig, eine Bewegungsrichtung für das Kraftfahrzeug festzulegen. Ziel des temporären Betriebs des Fahrerassistenzsystems im zweiten Betriebsmodus ist es, einen Bereich zu vermeiden oder sicher zu durchfahren, in dem die kritische Fahrsituation vorliegt, die zu einem Umschalten der Steuereinrichtung in den zweiten Betriebsmodus geführt hat. Wesentliches Merkmal der Zielposition ist, dass sie in einem Bereich liegt, in dem die Umschaltbedingung nicht erfüllt ist, wobei das Fahrerassistenzsystem keine kritische Fahrsituation oder eine Fahrsituation, die beispielsweise jenseits des Komfortbereichs eines Fahrers liegt, prognostiziert.

Beim Fortsetzen des Fahrbetriebs kann vorgesehen sein, dass das Fahrerassistenzsystem das Kraftfahrzeug derart führt, dass eine vom Fahrer gewünschte Route erkannt wird und der Fahrbetrieb entlang dieser Route fortgesetzt wird. Daher ist es möglich, dass das Fahrerassistenzsystem zur Auswertung von Egodaten, insbesondere von Routendaten eines Navigationssystems, und Umfelddaten zur Bestimmung einer vom Fahrer gewünschten Sollroute des Kraftfahrzeugs ausgebildet ist, wobei die Zielposition auf der Sollroute liegt. Das Fahrerassistenzsystem wird typischerweise für relativ kurze Strecken; beispielsweise einige hundert Meter, im zweiten Betriebsmodus betrieben werden, da kritische Fahrsituationen nach solchen Strecken typischerweise überwunden sind. Daher reicht es zur Bestimmung der Route häufig, eine Route zu berechnen, die dem Straßenverlauf folgt. Es ist jedoch durchaus möglich, dass die Umschaltbedingung im Bereich einer Kreuzung oder Abzweigung erfüllt wird und das Fahrerassistenzsystem daher den Fahrerwillen erkennen muss, wenn einer entsprechenden Route gefolgt werden soll. Dies ist besonders einfach, wenn der Fahrer mit Hilfe eines Navigationssystems eine Route geplant hat, da dann schlicht dieser Route gefolgt werden kann. Es können jedoch auch eine Vielzahl anderer Fahrzeugsysteme ausgewertet werden. So kann beispielsweise ein gesetzter Blinker als Indiz gewertet werden, dass der Fahrer von der befahrenen Straße abbiegen möchte. Es können aber auch typische Verkehrsmuster ausgewertet werden. Weitere Verfahren zur Prognose einer voraussichtlich befahrenen Route sind für Navigationssysteme bekannt. Solche Verfahren können selbstverständlich auch im erfindungsgemäßen Kraftfahrzeug genutzt werden.

Es ist besonders vorteilhaft, wenn das Fahrerassistenzsystem derart zur Bestimmung der Zielposition ausgebildet ist, dass an der Zielposition die prognostizierte Verkehrssituation und/oder ein Streckenverlauf eine sichere Übergabe der Fahrzeugführung an den Fahrer erlaubt. Bei dem erfindungsgemäßen Kraftfahrzeug erfolgt zumindest die Steuerung des Kraftfahrzeugs vollständig autonom, das heißt, dass der Fahrer während der Zeit des Betriebs des Fahrerassistenzsystems im zweiten Betriebsmodus keinerlei Eingriffsmöglichkeit hat. Dies ist besonders einfach bei der Nutzung von Drive-by-Wire-Systemen möglich, bei denen die Lenkung der Räder mechanisch vollständig von der Bewegung des Lenkrads entkoppelt ist. Insbesondere bei solchen Systemen ist es vorteilhaft, wenn eine Rückübergabe der Kraftfahrzeugsteuerung an den Fahrer in einer Situation erfolgt, in der möglichst wenige Lenkbewegungen notwendig sind, da vor einem Wiederankoppeln des Lenkrads an die Lenkung der Räder eine Anpassung des Lenkwinkels an den Lenkradwinkel erfolgen muss, die vorteilhaft über längere Zeiträume erfolgt und/oder zumindest geringfügige Störungen der Fahrtrajektorie erzeugt.

Dies kann weitgehend kompensiert werden, wenn die Rückübergabe in einem geeigneten Bereich erfolgt, wobei es insbesondere vorteilhaft ist, wenn die Strecke relativ gerade ist und ein vorgegebener Mindestabstand zu weiteren Verkehrsteilnehmern eingehalten wird.

Das Fahrerassistenzsystem kann insbesondere zum Umschalten vom zweiten in den ersten Betriebsmodus bei Vorliegen wenigstens einer Rückschaltbedingung ausgebildet sein, wobei die oder eine der Rückschaltbedingungen ist, dass die Umschaltbedingung nicht erfüllt ist und/oder dass die Verkehrssituation eine sichere Rückgabe der Fahrzeugkontrolle an den Fahrer erlaubt und/oder dass die Zielposition erreicht ist. Das Nichterfülltsein der Umschaltbedingung bedeutet, dass keine kritische Fahrsituation, also eine Fahrsituation, in der sich das Kraftfahrzeug im physikalischen Grenzbereich oder jenseits des Komfortbereichs eines Fahrers bewegt, zu erwarten ist. Dann ist es nicht mehr notwendig, dass das Fahrerassistenzsystem im zweiten Betriebsmodus verbleibt. Es ist jedoch dennoch vorteilhaft mit der Rückübergabe der Fahrzeugführung zu warten, bis diese in einer entsprechenden Verkehrssituation problemlos möglich ist. Wie erläutert kann bereits beim Wechseln in den zweiten Betriebsmodus oder bei laufendem Betrieb im zweiten Betriebsmodus eine Zielposition bestimmt werden, die insbesondere die beiden vorgenannten Bedingungen erfüllen kann. Damit ist für die Zielposition zumindest prognostiziert, dass die weiteren genannten Bedingungen zum Zurückschalten in den ersten Betriebsmodus erfüllt sind.

Beim autonomen Fahren im zweiten Betriebsmodus ist es möglich, das Kraftfahrzeug auf einer zumindest abschnittsweise vorberechneten Trajektorie zu führen. Es ist daher vorteilhaft, wenn das Fahrerassistenzsystem zur Bestimmung einer Steuertrajektorie zwischen der momentanen Position des Kraftfahrzeugs und der Zielposition und zur Steuerung des Kraftfahrzeugs entlang der Steuertrajektorie im zweiten Betriebsmodus ausgebildet ist. Zur Bestimmung von Trajektorien zum autonomen Fahren sind eine Vielzahl von Algorithmen bekannt. Besonders vorteilhaft können sogenannte "best first"-Algorithmen genutzt werden. Bei dieser Art von Suchalgorithmus werden zunächst Trajektorien berechnet, die voraussichtlich auf besonders kurzem Weg oder besonders schnell zum Ziel führen. Beispielsweise kann ein a*-Algorithmus genutzt werden.

Es ist jedoch auch möglich, dass bereits im Rahmen der Vorausberechnung von zukünftigen Fahrsituation Trajektorien berechnet wurden. Wie eingangs erläutert, findet ein Wechsel in den zweiten Betriebsmodus vorzugsweise nur dann statt, wenn zumindest eine Möglichkeit existiert, die kritische Situation zu durchfahren. Es liegt also zumindest eine bekannte Trajektorie vor, die sicher durch das Kraftfahrzeug befahrbar ist. Damit ist es, wenn die zukünftigen Fahrsituationen unter Zuhilfenahme von Trajektorien berechnet wurden, möglich, die entsprechenden Trajektorien im Anschluss direkt zur Steuerung des Kraftfahrzeugs, also als Steuertrajektorie, zu nutzen.

Wird eine Steuertrajektorie neu berechnet oder sind mehrere Trajektorien zum Durchfahren der kritischen Situation bekannt, so kann eine optimale Steuertrajektorie bestimmt beziehungsweise gewählt werden. Die Optimierung der Steuertrajektorie kann insbesondere bezüglich sicherheitsrelevanter Parameter, wie beispielsweise dem Sicherheitsabstand zu Hindernissen oder dem Abstand der Beschleunigungskräfte, die zum Fahren der Trajektorie notwendig sind, zu einem Maximalwert für die Beschleunigungskräfte, erfolgen. In vielen Fällen ist der Raum der nutzbaren Trajektorien für das Kraftfahrzeug hinreichend groß, so dass auch weitere Parameter, insbesondere zur Minimierung der Belastung eines Fahrers, bei der Optimierung berücksichtigt werden können. Es kann insbesondere versucht werden, die Beschleunigung in Längs- und/oder Querrichtung zu minimieren. Zudem kann versucht werden, eine Trajektorie zu ermitteln, die eine möglichst zeitnahe Rückübergabe der Fahrzeugführung an den Fahrer ermöglicht. Häufig ist es bereits durch eine Steuertrajektorie, die minimal von einem prognostizierten Fahrerwillen abweicht, möglich, eine kritische Fahrsituation sicher zu durchfahren. Selbstverständlich werden bei der Berechnung der Steuertrajektorie die physikalischen Grenzen des Kraftfahrzeugs berücksichtigt. Es ist jedoch auch möglich, die Komfortgrenzen des Fahrers soweit möglich zu berücksichtigen.

Durch die erläuterte autonome Steuerung des Kraftfahrzeugs kann bereits eine Vielzahl von kritischen Fahrsituationen entschärft werden. Dennoch ist es vorteilhaft, weitere Fahrzeugsysteme im zweiten Betriebsmodus autonom durch das Fahrerassistenzsystem zu steuern. So kann das Fahrerassistenzsystem im zweiten Betriebsmodus zur autonomen Steuerung der Bremssysteme und/oder des Motors und/oder der Lenkung und/oder des vorzugsweise automatischen Getriebes des Kraftfahrzeugs ohne Eingriffsmöglichkeit durch den Fahrer ausgebildet sein. Insbesondere ist auch eine Ansteuerung einzelner Räder, insbesondere von Einzelradbremsen, möglich. Es ist auch möglich, dass die gesamte Querführung oder die gesamte Längs- und Querführung des Kraftfahrzeugs durch das Fahrerassistenzsystem erfolgt. In diesem Fall kann das Kraftfahrzeug entlang beliebiger, physikalisch durch das Kraftfahrzeug fahrbarer, vorberechneter Trajektorien bewegt werden. Dies ist vorteilhaft, da bei ausschließlich autonomer Steuerung des Kraftfahrzeugs unerwartete Eingriffe des Fahrers in andere Steuersysteme die Durchführung der berechneten Trajektorien stören können.

Das Fahrerassistenzsystem kann insbesondere zur Berechnung von mehreren von der momentanen Position des Kraftfahrzeugs ausgehenden fahrbaren Trajektorien mit wenigstens einer aus Egodaten und/oder Umfelddaten bestimmten Randbedingung ausgebildet sein und die Umschaltbedingung kann zum Auswerten der fahrbaren Trajektorien ausgebildet sein. Die Prognose zukünftiger Fahrsituationen und das Erkennen der Umschaltbedingungen, insbesondere der Tatsache, dass eine Fahrsituation ein Fahren im physikalischen Grenzbereich oder jenseits des Komfortbereichs des Fahrers erfordert, kann also durch Berechnung einer Vielzahl möglicher Trajektorien und eine Auswertung der Trajektorien erfolgen. Als fahrbare Trajektorien werden insbesondere solche Trajektorien betrachtet, die ohne Beeinträchtigung von Personen, des Kraftfahrzeugs und Drittgegenständen auszuführen sind. Insbesondere können bei der Bestimmung der fahrbaren Trajektorien auch Parameter des Kraftfahrzeugs selbst, wie ein maximaler Lenkwinkel, maximal mögliche Beschleunigungen, die Reibungskraft zwischen Reifen und Straße oder Ähnliches berücksichtigt werden. Die Fahrbarkeit der Trajektorien kann durch die Anwendung von Randbedingungen sichergestellt werden.

Eine besonders einfache Berechnung der Trajektorien ist möglich, wenn die Trajektorien zunächst ausschließlich als Trajektorien im Ortsraum bestimmt werden. Es ist jedoch auch möglich, Trajektorien direkt derart zu berechnen, dass sie bestimmten Orten feste Zeiten zuordnen oder dass an jedem Ort zusätzlich eine Geschwindigkeit berechnet wird. Des Weiteren können Trajektorien weitere Parameter, wie beispielsweise eine Ausrichtung eines Kraftfahrzeugs, insbesondere einen Schwimmwinkel, also den Winkel zwischen der Ausrichtung des Kraftfahrzeugs und der Bewegungsrichtung, umfassen. Es ist auch möglich, die Trajektorien durch eine vorwärts oder rückwärts rechnende Simulation der Fahrzeugbewegung zu berechnen, die eine Vielzahl von Parametern umfasst, wie beispielsweise die bereits genannten Ego- und Umfelddaten.

Beispielsweise können alle fahrbaren Trajektorien berechnet werden, die in einen vorgegebenen Straßenbereich führen. Die Endpunkte der Trajektorien können derart bestimmt werden, dass sie eine vorgegebene Entfernung zum Kraftfahrzeug aufweisen, oder die Trajektorien können derart berechnet werden, dass sie eine gewisse zeitliche Länge aufweisen.

Bei der Berechnung der Trajektorien können neben Randbedingungen, die die physikalische Fahrbarkeit der Trajektorien sicherstellen, auch Randbedingungen berücksichtigt werden, die beispielsweise minimale Sicherheitsabstände zu Objekten, Komfortparameter, wie maximale Längs- oder Querbeschleunigungen, Verkehrsregeln oder Ähnliches betreffen. Werden bewegte Objekte im Fahrzeugumfeld erkannt, so können die Randbedingungen insbesondere auch Bewegungsvoraussagen für diese Objekte treffen. Insbesondere bei der Berücksichtigung von bewegten Objekten ist es vorteilhaft, die Trajektorien nicht im reinen Ortsraum, sondern in einem Raum, der eine zusätzliche Zeitkoordinate aufweist, zu berechnen. Bewegte Objekte können in diesem Fall als ein nicht nutzbares Volumen in diesem Raum beschrieben werden.

Häufig ist es möglich, den Raum der berechneten Trajektorien einzuschränken, indem die vom Fahrer gewünschte Sollroute berücksichtigt wird. Eine solche Sollroute kann beispielsweise ermittelt werden, indem Routendaten eines Navigationssystems, Egodaten und/oder Umfelddaten ausgewertet werden. Führt z. B. eine geplante Route eines Navigationssystems an einer Kreuzung nach rechts, so kann die Berechnung von Trajektorien, die entlang des weiteren Straßenverlaufs beziehungsweise nach links führen, zunächst zurückgestellt werden. Die zeitliche oder räumliche Länge der Trajektorien kann abhängig von verschiedenen Parametern, wie beispielsweise der gefahrenen Geschwindigkeit, der Verkehrsdichte oder dem Straßenverlauf, angepasst werden.

Es ist möglich, dass das Fahrerassistenzsystem zur Bestimmung wenigstens eines an der Position des Kraftfahrzeugs beginnenden Fahrbereichs, der durch das Kraftfahrzeug befahrbar ist, ausgebildet ist, wobei die Randbedingung oder eine der Randbedingungen ist, dass die Trajektorien vollständig innerhalb des Fahrbereichs verlaufen. Dabei ist es möglich, dass der Fahrbereich derart bestimmt wird, dass durch Hindernisse blockierte Bereiche aus dem Fahrbereich ausgeschlossen werden. Es ist jedoch auch möglich, durch Hindernisse blockierte Bereiche zunächst im Fahrbereich zu belassen und im Fahrbereich vorhandene Hindernisse direkt bei der Trajektorienberechnung zu berücksichtigen, so dass die Hindernisse durch die berechneten Trajektorien vermieden werden. Damit ist ein Bereich bekannt, durch den die Trajektorien verlaufen können. Typischerweise wird ein solcher Bereich als der Bereich der Fahrbahn, der keine Hindernisse umfasst, bestimmt, es ist jedoch auch möglich, gewisse Bereiche der Fahrbahn auszuschließen oder zusätzliche Bereiche zum Fahrbereich hinzuzunehmen. Nicht jeder Teil des Fahrbereichs kann notwendigerweise durch eine fahrbare Trajektorie erreicht werden, da die fahrbaren Trajektorien beispielsweise durch den möglichen Lenkwinkel des Kraftfahrzeugs begrenzt sind.

Es ist möglich, dass bereits bei der Festlegung des Fahrbereichs Sicherheitsabstände zu Hindernissen berücksichtigt werden. Alternativ kann die Berücksichtigung von Sicherheitsabständen jedoch auch nachträglich erfolgen, indem alle Trajektorien vom Rand des Fahrbereichs beabstandet werden. Es ist zu beachten, dass der Fahrbereich nur dann zeitunabhängig ist, wenn keine bewegten Hindernisse im Fahrzeugumfeld vorhanden sind. Bewegte Hindernisse können berücksichtigt werden, indem ein zeitabhängiger Fahrbereich bestimmt wird. Zur Vereinfachung der Berechnung ist es jedoch auch möglich, alle Bereiche, die innerhalb eines vorgegebenen Zeitintervalls von bewegten Hindernissen überstrichen werden, zunächst aus dem Fahrbereich auszunehmen. Dadurch ist auch bei Vorhandensein von bewegten Objekten eine besonders einfache Berechnung von Trajektorien möglich und die Nutzung eines rechenaufwendigen zeitabhängigen Fahrbereichs muss erst dann erfolgen, wenn bei Nutzung des zuvor bestimmten Fahrbereichs keine oder sehr wenige Trajektorien gefunden wurden.

Die die Trajektorien beschreibenden Parameter, insbesondere die Ortskoordinaten, sind typischerweise kontinuierliche Variablen. Dadurch müssten selbst bei einer technisch bedingten endlichen Auflösung sehr viele einzelne Trajektorien berechnet werden, um die möglichen Trajektorien zu finden. Zur Reduzierung der Trajektorienzahl sind insbesondere zwei Ansätze denkbar. So ist es möglich, dass das Fahrerassistenzsystem zur Berechnung der fahrbaren Trajektorien als wenigstens eine parametrisierte Trajektorienschar aus einer Vielzahl von fahrbaren Trajektorien und/oder als mehrere einzelne fahrbare Trajektorien, die durch einen vorgegebenen oder anpassbaren Abstand ihrer Parameter, insbesondere der Ortskoordinaten, beabstandet sind, ausgebildet ist. Im ersten Fall werden die Trajektorien also zumindest teilweise als kontinuierliche Trajektorienschar angegeben. So können beispielsweise bei einer Nutzung reiner Ortstrajektorien zwei Begrenzungstrajektorien bestimmt werden, aus denen in Abhängigkeit wenigstens eines Parameters die weiteren dazwischenliegenden Trajektorien berechnet werden. Eine entsprechende Parametrisierung ist selbstverständlich für mehrere Parameter gleichzeitig möglich.

Insbesondere bei komplexeren Berechnungsverfahren für die Trajektorien, also beispielsweise einer Berechnung der Trajektorien anhand eines simulierten physikalischen Modells, können solche kontinuierlichen Trajektorienscharen jedoch sehr aufwendig zu berechnen sein. Insbesondere in diesen Fällen ist es vorteilhaft, diskrete Trajektorien zu bestimmen, wobei die einzelnen Trajektorien mit einem vorgebbaren Abstand beabstandet sind. Damit wird also eine Diskretisierung der einzelnen Parameter mit einer vorgebbaren Auflösung erreicht. In Einzelfällen kann es aber auch vorteilhaft sein, Trajektorien, die mehrere Parameter umfassen, in einigen der Parameter als kontinuierliche Schar und in den anderen der Parameter diskretisiert darzustellen.

Zur Berechnung der Trajektorien ist eine Vielzahl von Ansätzen möglich. Wie erwähnt ist es besonders einfach, zunächst ausschließlich Raumkurven als Trajektorien anzugeben. In diesem Fall können zunächst Fahrschläuche ermittelt werden, innerhalb derer sich kein Hindernis befindet. Ein Fahrschlauch bezeichnet in diesem Fall einen Bereich, der vollständig durch fahrbare Trajektorien bedeckt werden kann. Ein solcher Fahrschlauch und die zwischen den Grenzen des Fahrschlauchs liegenden Trajektorien können dadurch beschrieben werden, dass zunächst zwei geometrische Begrenzungstrajektorien für den Fahrschlauch bestimmt werden, die den Fahrschlauch begrenzen. Solche Begrenzungstrajektorien weisen typischerweise einen vorgegebenen Abstand vom Rande eines Fahrbereichs auf. Das heißt, sie laufen mit einem vorgegebenen Sicherheitsabstand an Hindernissen in der Fahrzeugumgebung vorbei. Ist zwischen zwei dieser Begrenzungstrajektorien kein Hindernis, so wird typischerweise ein Fahrschlauch durch diese beiden Begrenzungstrajektorien gebildet, falls alle Trajektorien zwischen ihnen befahrbar sind. Ergänzend kann innerhalb des Fahrschlauchs noch eine Idealtrajektorie bestimmt werden, die beispielsweise die kürzeste Strecke bis zu einem vorgegebenen Punkt oder Streckenabschnitt beschreibt, die mit der höchsten Geschwindigkeit befahrbar ist oder Ähnliches.

Die weiteren Trajektorien des Fahrschlauchs können dann berechnet werden, indem zwischen den beiden Begrenzungstrajektorien beziehungsweise zwischen den Begrenzungstrajektorien und der Idealtrajektorie interpoliert wird. Alternativ ist es auch möglich, die Idealtrajektorie zu variieren, beispielsweise indem zur Idealtrajektorie benachbarte Trajektorien berechnet werden, die nur in eine Richtung von der Idealtrajektorie abweichen und vorzugsweise genauso viele oder weniger Wendepunkte aufweisen. Wird das erläuterte Verfahren für jeden Teil des Fahrbereichs durchgeführt, durch den ein Fahrschlauch führbar ist, so können zumindest diejenigen Trajektorien im Fahrbereich ermittelt werden, die von Fahrzeugen typischerweise befahren werden und die mit den höchsten Geschwindigkeiten fahrbar sind beziehungsweise bei vorgegebener Geschwindigkeit zu den geringsten Kräften in Querrichtung zum Kraftfahrzeug führen.

In diesem Zusammenhang ist wesentlich, dass es unnötig ist, jede fahrbare Trajektorie zu bestimmen. Die Berechnung der fahrbaren Trajektorie dient zunächst nur dazu zu ermitteln, ob voraussichtlich eine kritische Fahrsituation vorliegt. Kritische Fahrsituationen zeichnen sich jedoch dadurch aus, dass die Parameter, die eine Weiterfahrt des Kraftfahrzeugs ermöglichen, relativ stark eingegrenzt sind. Dies bedeutet jedoch, dass in den kritischen Fahrsituationen, die erkannt werden sollen, beispielsweise Trajektorien mit einer Vielzahl von notwendigen Wendepunkten ohnehin nicht fahrbar sind. Es ist also ausreichend, wenn, wie beschreiben, nur einfache Trajektorien mit wenigen Wendepunkten berechnet werden.

Das Fahrerassistenzsystem kann insbesondere zur Bestimmung wenigstens eines Geschwindigkeitsprofils für jede der fahrbaren Trajektorien ausgebildet sein. Ein Geschwindigkeitsprofil kann im einfachsten Fall ausgehend von einer rein geometrischen Trajektorie bestimmt werden, indem die auftretenden Zentrifugalkräfte der Trajektorie, die sich aus der Masse des Kraftfahrzeugs, der Geschwindigkeit des Kraftfahrzeugs an dem Punkt und der lokalen Krümmung, das heißt dem Kurvenradius, ergeben, mit einem vorgegebenen oder lokal bestimmten Grenzwert verglichen werden. Der Grenzwert für die Zentrifugalkraft entspricht der Reibungskraft zwischen dem Kraftfahrzeug und der Straße.

Es ist dabei möglich, dass ein solcher Grenzwert für jeden der Reifen des Kraftfahrzeugs getrennt bestimmt wird und mit Zentrifugalkräften, die an diesem Rad wirken, verglichen wird. Dies ist insbesondere vorteilhaft, da abhängig von Roll- und Nickwinkel des Kraftfahrzeugs unterschiedliche Normalkräfte auf die einzelnen Reifen wirken können, wodurch die Reibkraft selbst bei gleichem Reibungskoeffizienten unterschiedlich ist. Der Reibungskoeffizient zwischen Reifen und Straße kann fest vorgegeben sein, es ist jedoch auch möglich, ihn abhängig von beispielsweise der Reifenart, der Laufleistung des Reifens, den lokalen Eigenschaften der Straße, die beispielsweise durch eine Kamera erfasst wurden oder Witterungsbedingungen anzupassen.

Aus der global oder lokal bestimmten maximalen Reibkraft kann damit, unter Umständen unter Berücksichtigung eines Sicherheitsintervalls für die Reibkraft, eine maximal fahrbare Geschwindigkeit für jeden Punkt der Trajektorie festgelegt werden. Werden zusätzlich die maximalen Beschleunigungs- und Verzögerungswerte des Kraftfahrzeugs berücksichtigt, kann ein Geschwindigkeitsprofil der maximal möglichen Geschwindigkeiten für jeden Punkt der Trajektorie bestimmt werden.

Werden bewegte Hindernisse nicht derart berücksichtigt, dass von ihnen im betrachteten Zeitintervall überstrichene Bereiche vollständig aus dem Fahrbereich ausgenommen werden, so müssen zur Trajektorienberechnung ohnehin Geschwindigkeitsgrenzwerte berücksichtigt werden. In diesem Fall ist es vorteilhaft, zumindest zwei Geschwindigkeitsprofile für eine Trajektorie, nämlich eines für die Maximalgeschwindigkeiten und eines für die Minimalgeschwindigkeiten am jeweiligen Ort der Trajektorie zu bestimmen.

Als Umschaltbedingung zum Umschalten in den zweiten Betriebsmodus des Fahrerassistenzsystems können insbesondere Bedingungen genutzt werden, die direkt auf der Menge der fahrbaren Trajektorien operieren, oder solche, die Bedingungen für weitere Fahrzeugparameter aus den fahrbaren Trajektorien ableiten. So kann das Fahrerassistenzsystem zur Bestimmung eines Grenzwertes für einen Fahrzeugparameter aus den fahrbaren Trajektorien ausgebildet sein und die Umschaltbedingung oder eine der Umschaltbedingungen kann das Über- oder Unterschreiten des Grenzwertes sein. Der Fahrzeugparameter kann insbesondere die momentane Ist-Geschwindigkeit des Kraftfahrzeugs sein. Das Vorgehen zum Erhalt eines solchen Grenzwerts soll beispielhaft für die Fahrzeuggeschwindigkeit erläutert werden. Es ist wie erläutert vorteilhaft, wenn für jede der Trajektorien zumindest ein Geschwindigkeitsprofil bestimmt wurde. Insbesondere kann ein Profil bestimmt werden, das die maximalen Geschwindigkeiten für jeden Punkt angibt, mit denen die Trajektorie mit den maximalen Beschleunigungs- beziehungsweise Verzögerungswerten des Kraftfahrzeugs befahrbar ist. Durch diese Berechnung lässt sich für jede der Trajektorien eine maximale Geschwindigkeit des Kraftfahrzeugs am momentanen Aufenthaltsort des Kraftfahrzeugs bestimmen, mit der diese Trajektorie fahrbar ist.

Überschreitet die Geschwindigkeit des Kraftfahrzeugs zu irgendeinem Zeitpunkt die höchste der Geschwindigkeiten der Trajektorien an der Fahrzeugposition, so ist keine dieser Trajektorien fahrbar. Wesentliches Kriterium für eine kritische Fahrsituation ist damit, wie nah die aktuelle Fahrzeuggeschwindigkeit an der schnellsten Geschwindigkeit der Trajektorien für die Fahrzeugposition ist. Somit kann als Grenzwert für die Fahrzeuggeschwindigkeit eine Geschwindigkeit gewählt werden, die 90 % der höchsten Geschwindigkeit der Trajektorien an der Fahrzeugposition ist. Es kann auch eine Geschwindigkeit gewählt werden, bei der eine Mindestzahl von Trajektorien oder ein Fahrschlauch mit einer gewissen Mindestbreite mit einer Geschwindigkeit, die dem Grenzwert entspricht, befahrbar ist.

Soll der Grenzwert fahrerabhängig variiert werden, beispielsweise um bereits bei einem Verlassen eines Komfortbereichs des Fahrers in den zweiten Betriebsmodus zu schalten, so kann dies entweder dadurch erfolgen, dass die Berechnung des Grenzwerts aus den Trajektorien entsprechend angepasst wird, oder dadurch, dass bereits bei der Berechnung der möglichen Trajektorien engere Grenzwerte vorgegeben werden, wodurch beispielsweise die maximal erlaubten Querbeschleunigungen, die beim Befahren der berechneten Trajektorien auftreten, weiter reduziert werden.

Das oben beschriebene Vorgehen erlaubt eine besonders einfache Bestimmung, ob die Umschaltbedingung vorliegt. Beim beschriebenen Vorgehen wird jedoch nur ein einzelnes Geschwindigkeitsprofil berücksichtigt. Insbesondere in Verkehrssituationen, in den sich mehrere bewegte Hindernisse im Umfeld des Kraftfahrzeugs befinden, oder beim Betrieb des Kraftfahrzeugs in einem Grenzbereich, bei dem unter Umständen starke geschwindigkeitsabhängige seitliche Verschiebungen des Kraftfahrzeugs, auftreten können, kann eine getrennte Bestimmung der geometrischen Form der Trajektorie und des zugehörigen Geschwindigkeitsprofils nicht mehr möglich sein. Insbesondere in diesem Fall kann es vorteilhaft sein, statt eines Grenzwerts für eine Ist-Größe des Kraftfahrzeugs eine Umschaltbedingung zu nutzen, die direkt die fahrbaren Trajektorien auswertet.

So kann die Umschaltbedingung oder eine der Umschaltbedingungen ein Unterschreiten eines Minimalwerts für die Anzahl der fahrbaren Trajektorien oder einer Breite eines Wertebereichs wenigstens eines Parameters, der eine Trajektorienschar der fahrbaren Trajektorien parametrisiert, sein. Die Nutzung dieser Umschaltbedingung beruht auf der Idee, dass bei einem Fahren weit weg von einem physikalischen Grenzbereich, beziehungsweise weit innerhalb eines Komfortbereichs, der die möglichen Trajektorien durch zusätzliche Randbedingungen einschränkt, stets eine sehr große Zahl von Trajektorien möglich ist, da Trajektorien stets variiert werden können und weiterhin alle Randbedingungen erfüllen. Der physikalische Grenzbereich beziehungsweise die Grenzen eines Komfortbereichs sind aber gerade dadurch definiert, dass bei einem Verlassen des physikalisch möglichen Bereichs beziehungsweise des Komfortbereichs die physikalischen- beziehungsweise Komfortrandbedingungen durch keine Trajektorie mehr erfüllt sind, wodurch keine fahrbare Trajektorie berechnet werden kann. Der jeweilige Grenzbereich, in dem ein Umschalten in den zweiten Betriebsmodus erfolgen soll, ist also dadurch gekennzeichnet, dass die Zahl der fahrbaren Trajektorien stark abnimmt. Sind die Trajektorien wie vorbeschrieben als beabstandete diskrete Trajektorien berechnet, so kann ein solches Abnehmen der Trajektorienzahl schlicht durch Vergleich der Trajektorienzahl mit einem Minimalwert festgestellt werden. Sobald dieser Minimalwert unterschritten wird, gilt die Umschaltbedingung als erfüllt und das Fahrerassistenzsystem wechselt in den zweiten Betriebsmodus. Dabei ist es möglich, dass Trajektorien, die in zumindest einem Parameter durchgehend einen Mindestabstand unterschreiten, nur als eine einzelne Trajektorie gezählt werden.

Sind die fahrbaren Trajektorien jedoch als parametrisierte Trajektorienschar dargestellt, so entspricht ein Abnehmen der Trajektorienzahl einer Einschränkung des Wertebereichs für zumindest Teile der Parameter der Trajektorienschar. Die Umschaltbedingung soll in diesem Fall also abhängig von der Breite des Wertebereichs wenigstens eines Parameters wenigstens einer der Trajektorienscharen sein. Hierfür ist eine Vielzahl von Möglichkeiten denkbar. So kann für jede Trajektorienschar ein Phasenraumvolumen bestimmt werden, in dem die Breiten der Wertebereiche für die verschiedenen Parameter jeder der Trajektorienscharen multipliziert werden. Es ist aber auch möglich nur einige der Parameter oder einen einzelnen Parameter, insbesondere eine Breite im Ortsraum, auszuwerten.

Als Umschaltbedingung kann also das Unterschreiten eines Minimalwertes durch die Summe der Phasenraumvolumina oder des Produkts der ausgewählten Parameter der einzelnen Trajektorien genutzt werden. Es ist aber auch möglich, nur einige der Trajektorienscharen zu berücksichtigen, beispielsweise nur solche, die entlang einer Sollroute verlaufen. Insbesondere kann auch nur die Trajektorienschar berücksichtigt werden, deren Phasenraumvolumen am größten ist, beziehungsweise bei der das Produkt mehrerer gewählter Parameter oder ein einzelner Parameter am größten ist.

Es ist selbstverständlich möglich, vor Anwenden der Umschaltbedingung einige der Trajektorien zu verwerfen. So ist es möglich, dass bei der Berechnung der Trajektorien nur einige der Randbedingungen berücksichtigt werden und anschließend vor Auswertung der Umschaltbedingung jene Trajektorien verworfen beziehungsweise nicht berücksichtigt werden, die die weiteren Randbedingungen nicht erfüllen. Ergänzend oder alternativ können auch verschiedene Randbedingungen zur Berechnung der fahrbaren Trajektorien und zur Berücksichtigung bei der Auswertung der Umschaltbedingung genutzt werden. So ist es beispielsweise möglich, dass zur Berechnung der fahrbaren Trajektorien zunächst Grenzwerte genutzt werden, die einen physikalischen Grenzbereich beschreiben, vor der Auswertung der Umschaltbedingung jedoch jene Trajektorien verworfen werden, die jenseits eines Komfortbereichs des Fahrers liegen. Damit ist es möglich, zunächst festzustellen, ob ausreichend viele fahrbare Trajektorien im Komfortbereich des Fahrers liegen, um die Führung des Kraftfahrzeugs beim Fahrer zu belassen. Ist dies nicht der Fall, wobei jedoch immer noch Trajektorien im Komfortbereich des Fahrers möglich sind, so kann eine Führung des Kraftfahrzeugs durch das Fahrerassistenzsystem mit einer der Trajektorien im Komfortbereich erfolgen. Ist dies jedoch nicht möglich, so kann zur autonomen Führung des Kraftfahrzeugs eine der fahrbaren Trajektorien genutzt werden, die zwar physikalisch möglich ist, jedoch jenseits des Komfortbereichs des Fahrers liegt.

Vorzugsweise kann das Fahrerassistenzsystem dazu ausgebildet sein, in dem Fall, wenn keine fahrbare Trajektorie ermittelt werden kann, wenigstens eine Randbedingung anzupassen und fahrbare Trajektorien erneut zu berechnen. Wie eingangs erwähnt wurde, ist es insbesondere beim plötzlichen Auftreten von unerwarteten Verkehrssituationen nicht immer möglich, eine physikalisch mögliche Trajektorie im Fahrbereich unter den verwendeten Randbedingungen zu ermitteln. Eine Berechnung einer fahrbaren Trajektorie kann unter Umständen nicht erfolgen, weil bestimmte Randbedingungen nicht derart gewählt wurden, dass sie tatsächlichen physikalischen Grenzen entsprechen, sondern beispielsweise so, dass sie einen Komfortbereich eines Fahrers beschreiben. Daher ist es vorteilhaft, wenn das Fahrerassistenzsystem vor dem Ermitteln der Notfalltrajektorie zum Anpassen wenigstens einer Randbedingung und zur Neuberechnung der fahrbaren Trajektorien ausgebildet ist.

Insbesondere ist es möglich, dass bei der Berechnung der fahrbaren Trajektorien ausschließlich der Bereich der Fahrbahn selbst, also der Bereich einer Straße, der für den Fahrzeugverkehr bestimmt ist, als Fahrbereich betrachtet wird und damit eine Randbedingung zur Bestimmung der fahrbaren Trajektorien bildet. Verlässt nun das Kraftfahrzeug, beispielsweise aufgrund einer plötzlichen Lenkbewegung des Fahrers oder einer unerwarteten Verkehrssituation, den Fahrbahnbereich, so muss das Kraftfahrzeug zur Rückkehr auf die Fahrbahn einen Bereich überqueren, der nicht der Fahrbahn zugehörig ist. Es ist vorteilhaft, wenn in diesem Fall der Fahrbereich derart angepasst wird, dass der Bereich zwischen Kraftfahrzeug und Fahrbahn, soweit er frei von Hindernissen ist, dem Fahrbereich hinzugefügt wird. Auch in Fällen, in denen Kollisionen mit weiteren Kraftfahrzeugen vermieden werden sollen, kann es vorteilhaft sein, Bereiche neben der Straße zum Fahrbereich hinzuzufügen.

Es ist jedoch auch möglich, andere Randbedingungen zu variieren. Beispielsweise können in einigen Ausführungsformen des erfindungsgemäßen Kraftfahrzeugs bei der Berechnung der fahrbaren Trajektorien die Randbedingungen derart festgelegt sein, dass zunächst nur fahrbare Trajektorien in einem Komfortbereich des Fahrers ermittelt werden. In diesem Fall ist es möglich, dass zunächst statt der Berechnung einer Notfalltrajektorie die Bedingungen an die tatsächlichen physikalischen Randbedingungen angepasst werden und die fahrbaren Trajektorien neu berechnet werden. Ergänzend oder alternativ ist es auch möglich, dass Sicherheitsabstände oder Sicherheitsintervalle für bestimmte Parameter reduziert werden. Zudem können beispielsweise einige Fahrzeugsysteme wie Bremsen, Motor oder Ähnliches einen Arbeitsbereich aufweisen, in dem eine Beschädigung der Komponente möglich ist. Typischerweise werden die Randbedingungen bei der Berechnung der fahrbaren Trajektorien in diesem Fall zunächst so gewählt werden, dass dieser Betriebsbereich gemieden wird.

Es ist möglich, dass das Fahrerassistenzsystem dazu ausgebildet ist, in dem Fall, wenn, insbesondere nach Anpassen der Randbedingung, keine fahrbare Trajektorie ermittelt werden kann, in einen dritten Betriebsmodus umzuschalten, in dem eine Notfalltrajektorie bestimmt wird.

Damit kann, wenn keine physikalisch fahrbare Trajektorie existiert, die eine Kollision mit einem Hindernis vermeidet, die Steuertrajektorie derart bestimmt werden, dass insbesondere Personenschäden vermieden werden können und Schäden an dem eigenen Kraftfahrzeug, weiteren Kraftfahrzeugen oder Drittgegenständen weitest möglich reduziert werden. Das grundsätzliche Vorgehen zum Berechnen einer solchen Trajektorie ist dem Fachmann bekannt und wird daher nicht näher erläutert.

Im erfindungsgemäßen Verfahren ist damit ein abgestuftes Eingreifen in den Fahrbetrieb möglich. Dabei ist es zunächst möglich, fahrbare Trajektorien unter relativ engen Randbedingungen, die insbesondere einen Komfortbereich des Fahrers berücksichtigen, zu bestimmen. Wird anhand dieser Trajektorien ermittelt, dass die Umschaltbedingung nicht erfüllt ist, was typischerweise bedeutet, dass eine Vielzahl verschiedener Trajektorien innerhalb der ersten Randbedingungen möglich ist, so wird nicht in den Fahrbetrieb eingegriffen und die Führung des Kraftfahrzeugs verbleibt beim Fahrer. Ist die Umschaltbedingung erfüllt und es wurden fahrbare Trajektorien unter den ersten Randbedingungen ermittelt, so kann der Fahrbetrieb im zweiten Betriebsmodus entlang einer dieser fahrbaren Trajektorien fortgesetzt werden. Damit ist es insbesondere möglich, den Fahrbetrieb im Komfortbereich des Fahrers entlang einer gewünschten Sollroute fortzusetzen. Wurde unter den ersten Randbedingungen keine fahrbare Trajektorie ermittelt, so können eine oder mehrere dieser Randbedingungen angepasst werden. Insbesondere kann eine Einschränkung der Trajektorienparameter auf den Komfortbereich des Fahrers aufgegeben werden. Wird mit dem so gebildeten zweiten Randbedingungen wenigstens eine Trajektorie ermittelt, so kann der Fahrbetrieb fortgesetzt werden, es ist jedoch möglich, dass beispielsweise der Komfortbereich eines Fahrers bei der Fortsetzung des Fahrbetriebs verlassen wird. Kann auch nach einer, unter Umständen mehrmaligen, Anpassung der Randbedingungen keine fahrbare Trajektorie ermittelt werden, so wird eine Notfalltrajektorie bestimmt. Mit einer solchen Notfalltrajektorie wird die Zielposition nicht erreicht, das heißt es erfolgt keine Fortsetzung des Fahrbetriebs. Mit der Berechnung und Ausführung einer Notfalltrajektorie werden die typischen Funktionen eines Kollisionsvermeidungs- beziehungsweise Kollisionsfolgenminderungssystems erreicht, das heißt es kann versucht werden, das Fahrzeug zum sicheren Stillstand zu bringen oder es können Kollisionsfolgen minimiert werden. Damit wird im erfindungsgemäßen Kraftfahrzeug ein Eingriff in den Fahrbetrieb möglich, der nach der Kritikalität der Fahrsituation abgestuft ist.

Bei einem Betrieb des Fahrerassistenzsystems im zweiten Betriebsmodus werden dem Fahrer zumindest Teile der Kraftfahrzeugführung entzogen. Zudem kann es zu ungewöhnlich hohen Beschleunigungen in Längs- oder Querrichtung des Kraftfahrzeugs kommen. Daher ist es vorteilhaft, wenn das Fahrerassistenzsystem zum Ansteuern einer Hinweiseinrichtung zur Gabe eines akustischen, haptischen und/oder optischen Hinweises beim Umschalten in den zweiten Betriebsmodus und/oder vor Umschalten in den ersten Betriebsmodus, als Hinweis zur Fahrerübernahme, ausgebildet ist. Ein Hinweis zur Fahrerübernahme ist vorteilhaft, um den Fahrer darauf hinzuweisen, dass er nun wieder für die Führung des Kraftfahrzeugs verantwortlich sein soll.

Das Kraftfahrzeug kann eine Kommunikationseinrichtung zur drahtlosen Fahrzeug-zu-Fahrzeugkommunikation und/oder zur drahtlosen Fahrzeug-zu-Infrastrukturkommunikation aufweisen, wobei das Fahrerassistenzsystem zur Ermittlung von Umgebungsdaten durch Ansteuerung der Kommunikationseinrichtung zur Kommunikation mit Informationsquellen und/oder zur Kommunikation mit anderen Kraftfahrzeugen zur Übertragung von Warnhinweisen, insbesondere beim Umschalten in den zweiten Betriebsmodus, ausgebildet ist. Insbesondere können durch die Kommunikationseinrichtung Informationen über wenigstens ein weiteres Kraftfahrzeug, beispielsweise dessen Position, Geschwindigkeit, Lenkwinkel, Trajektorien und/oder geplante Manöver empfangen werden. Durch diese Informationen kann die Bewegungsvoraussage für dieses Kraftfahrzeuge verbessert werden, wodurch eine zuverlässigere Planung des eigenen Fahrbetriebs möglich ist. Es ist jedoch auch möglich, über die Kommunikationseinrichtung auf externe Datenbanken zuzugreifen. Datenbanken können insbesondere Informationen in einem fahrzeugeigenen Navigationssystem ersetzen oder ergänzen. Zur zuverlässigen Trajektorienberechnung sind exakte Informationen über den Verlauf der Fahrbahn, insbesondere Neigungswinkel, Steigungen, Kurvenradien und Ähnliches notwendig. Sind solche Daten nicht im Kraftfahrzeug oder einem Navigationssystem gespeichert, so können sie, insbesondere bereits zeitlich beabstandet vor dem Befahren des entsprechenden Straßenabschnitts, drahtlos aus einer Datenbank abgerufen werden.

Eine Gabe eines Warnsignals an weitere Fahrzeuge ist insbesondere vorteilhaft, da der zweite Betriebsmodus insbesondere in Notsituationen oder beim Fahren im physikalischen Grenzbereich beziehungsweise beim Fahren jenseits eines Komfortbereichs eines Fahrers, genutzt wird. Damit werden im zweiten Betriebsmodus mit erhöhter Wahrscheinlichkeit unerwartete Fahrmanöver oder Fahrmanöver an den physikalischen Grenzen des Kraftfahrzeugs durchgeführt. Es ist daher für andere Kraftfahrzeuge vorteilhaft, einen zusätzlichen Sicherheitsabstand zum eigenen Kraftfahrzeug zu wahren. Es ist auch möglich, dass die Kommunikationseinrichtung Fahrhinweise an die anderen Kraftfahrzeuge überträgt, um beispielsweise in Notsituationen einen größeren Fahrbereich nutzen zu können.

Kritische Situationen, in denen eine zuverlässige Beherrschung des Kraftfahrzeugs nicht mehr möglich ist, treten auf, wenn der Fahrer nicht mehr fähig ist, das Fahrzeug ordnungsgemäß zu steuern, beispielsweise weil er krank, übermüdet oder durch eine Situation überfordert ist. Ist der Fahrer nicht mehr fähig, das Fahrzeug ordnungsgemäß zu steuern, ist es zwar gewünscht, das Kraftfahrzeug zumindest mittelfristig zum Stillstand zu bringen, dennoch kann es auch vorteilhaft sein, das Kraftfahrzeug zunächst weiter zu betreiben und autonom in eine vorteilhafte Abstellposition zu fahren. Da in diesem Fall jedoch keine Rückgabe der Fahrzeugkontrolle an den Fahrer vor dem Abstellen des Kraftfahrzeugs gewünscht ist, ist es vorteilhaft, wenn das Fahrerassistenzsystem diesen Fall gesondert erkennt und in einen separaten Betriebsmodus wechselt.

Das Fahrerassistenzsystem kann daher in einem vierten Betriebsmodus zur autonomen Steuerung der Lenkung und/oder der Bremssysteme und/oder des Motors und/oder des insbesondere automatischen Getriebes des Kraftfahrzeugs ohne Eingriffsmöglichkeit durch den Fahrer ausgebildet sein, und das Kraftfahrzeug kann in eine sichere Abstellposition verbracht werden. Das abgestellte Kraftfahrzeug ist damit kein Verkehrshindernis für andere Verkehrsteilnehmer. Es wird im vierten Betriebsmodus vollständig autonom zu einer sicheren Abstellposition verbracht. Die sichere Abstellposition kann relativ nahe sein, beispielsweise ein Standstreifen einer Autobahn, es kann jedoch auch eine längere Strecke, beispielsweise bis zum nächsten Parkplatz, gefahren werden. Insbesondere wenn eine Krankheit des Fahrers, beispielsweise ein Herzinfarkt, festgestellt wird, ist es auch möglich, dass über eine Kommunikationseinrichtung des Kraftfahrzeugs ein Notruf abgesendet wird.

Insbesondere kann das Kraftfahrzeug ein Fahrerzustandserfassungsmittel zur Erfassung eines Fahrerzustands umfassen und das Fahrerassistenzsystem bei Ermittlung eines Fahrerzustandes, der eine Fahruntüchtigkeit des Fahrers anzeigt, zum Umschalten in den vierten Betriebsmodus ausgebildet sein. So kann ein Fahrerzustand beispielsweise durch eine Kamera und die Ermittlung einer Sitzposition oder einer Augenstellung ermittelt werden. Es ist auch möglich, beispielsweise den Puls oder den Herzschlag eines Fahrers oder Bedienhandlungen, wie Lenkbewegungen, zu erfassen. Durch diverse Erfassungsmittel können insbesondere Müdigkeit und Krankheit von Fahrern festgestellt werden.

Es ist ergänzend oder alternativ auch möglich, dass das Fahrerassistenzsystem bei einem Umschalten vom zweiten Betriebsmodus in den ersten Betriebsmodus zum Warten auf eine Eingabe eines Fahrers zur Fahrerübernahme und bei Nichterfolgen dieser Eingabe innerhalb eines vorgegebenen Zeitintervalls zum Umschalten in den vierten Betriebsmodus ausgebildet ist. Insbesondere kann vor Wechseln in den vierten Betriebsmodus ein wiederholter Hinweis an den Fahrer mit insbesondere steigender Intensität gegeben werden. Dieser Hinweis kann durch weitere Eingriffe in den Fahrbetrieb, wie beispielsweise ein kontinuierliches Verlangsamen des Kraftfahrzeugs oder Ähnliches ergänzt werden. Ein Wechsel in den vierten Betriebsmodus in diesem Fall ist vorteilhaft, da ein weiterer Betrieb des Kraftfahrzeugs nicht gewünscht wird, wenn der Fahrer nicht fähig oder willens ist, die Fahrzeugführung wieder zu übernehmen.

Zudem kann das Fahrerassistenzsystem dazu ausgebildet sein, bei Ermittlung einer vorgegebenen Mindestzahl und/oder bei Ermittlung einer vorgegebenen Mindesthäufigkeit von Umschaltungen vom ersten in den zweiten Betriebsmodus innerhalb eines vorgegebenen Zeitraums in den vierten Betriebsmodus umzuschalten. Ein regelmäßiges Umschalten des Fahrerassistenzsystems in den zweiten Betriebsmodus weist darauf hin, dass der Fahrer regelmäßig die Fahrsituation falsch einschätzt oder nicht mehr zur Führung des Kraftfahrzeugs fähig ist. Dies kann darauf hinweisen, dass der Fahrer müde oder unkonzentriert ist, sich in einem erregten Gemütszustand befindet oder ohnmächtigt ist. In diesem Fall kann es vorteilhaft sein, das Fahrzeug vorübergehend stillzulegen. Der vorgegebene Zeitraum kann insbesondere eine Fahrt mit dem Kraftfahrzeug, also die Zeit vom Starten des Kraftfahrzeugs bis zum Abschalten des Kraftfahrzeugs sein, es kann sich aber auch um eine vorgegebene Zeit wie beispielsweise eine oder zwei Stunden oder eine gewisse durch das Kraftfahrzeug zurückgelegte Entfernung handeln.

Beim Wechsel des Kraftfahrzeugs in den vierten Betriebsmodus kann davon ausgegangen werden, dass der Fahrer nicht fahrfähig ist. Es handelt sich also um eine Notsituation, in der es gerechtfertigt ist, die Fahrfreiheit der anderen Kraftfahrzeuge einzuschränken, um ein schnelles und sicheres Abstellen des Kraftfahrzeugs zu ermöglichen. Es ist daher möglich, dass das Kraftfahrzeug eine Kommunikationseinrichtung umfasst und das Fahrerassistenzsystem im vierten Betriebsmodus zur Ermittlung eines Sollfahrmanövers für wenigstens ein weiteres Kraftfahrzeug und zur Ansteuerung der Kommunikationseinrichtung zur Übertragung des Sollfahrmanövers an das Kraftfahrzeug ausgebildet ist, wobei insbesondere zusätzlich zum Sollfahrmanöver eine Prioritätsinformation übertragbar ist.

Es kann vorgesehen sein, dass das Kraftfahrzeug auch zum Empfang solcher Nachrichten ausgebildet ist, wobei insbesondere eine höchste Prioritätsinformation möglich ist, die eine Notsituation anzeigt. Beim Empfang einer Nachricht mit einer solchen höchsten Prioritätsinformation kann das Fahrerassistenzsystem dazu ausgebildet sein, diese Sollfahrmanöver auszuführen, soweit dies sicher möglich ist.

Verschiedene Fahrer haben stark unterschiedliche Komfortbereiche, in denen sie Kraftfahrzeuge komfortabel und zuverlässig führen können. Daher ist es vorteilhaft, wenn die Umschaltbedingung und/oder die Randbedingung zur Berechnung der fahrbaren Trajektorien und/oder die Bestimmung der Steuertrajektorie von einer vorgegebenen oder durch das Fahrerassistenzsystem ermittelten Eigenschaft des Fahrers abhängig ist. Es ist insbesondere möglich, dass die Fahrereigenschaft durch eine Selbsteinschätzung des Fahrers und ein Bedienelement einstellbar ist. So kann das Fahrerassistenzsystem beispielsweise zwischen den Stellungen "sportlich" und "Komfort" umstellbar sein. Es ist aber auch möglich, dass Eigenschaften des Fahrers, wie das Alter des Fahrers, der Müdigkeitszustand und Ähnliches, erfasst werden. Alternativ oder ergänzend ist jedoch auch möglich, die Eigenschaft durch eine Sensorik des Kraftfahrzeugs zu erfassen beziehungsweise anzupassen. Beispielsweise können die Lenkbewegungen ausgewertet werden oder der Fahrer kann durch eine Kamera oder eine weitere Sensorik beobachtet werden.

Es ist insbesondere möglich, dass eine fahrerabhängige Warnbedingung vorgesehen ist, die technisch genauso umgesetzt werden kann wie die Umschaltbedingung, wobei jedoch andere Randbedingungen, Grenzwerte oder Ähnliches genutzt werden. Bei Erfüllen dieser Warnbedingung kann zunächst eine Warnung ausgegeben werden, um den Fahrer darauf hinzuweisen, dass nun Trajektorien zu fahren sind, die jenseits seines Komfortbereichs liegen. Zudem kann auch eine Umschaltbedingung entsprechend angepasst werden, so dass ein Fahrer zunächst gewarnt werden kann, dass sein Komfortbereich verlassen wird, und ab einem gewissen Grad des Übersteigens des Komfortbereichs ein Umschalten in den zweiten Betriebsmodus erfolgen kann, so dass ein autonomes Fahren nur knapp jenseits des Komfortbereichs des Fahrers erfolgt.

Des Weiteren betrifft die Erfindung ein Verfahren zur Steuerung eines Kraftfahrzeugs, umfassend wenigstens ein Fahrerassistenzsystem und wenigstens ein Erfassungsmittel, wobei das Kraftfahrzeug in einem ersten Betriebsmodus des Fahrerassistenzsystems durch einen Fahrer steuerbar ist, umfassend die Schritte:
- Erfassen von das Kraftfahrzeug betreffenden Egodaten und das Kraftfahrzeugumfeld betreffenden Umfelddaten durch das Erfassungsmittel,
- Vorausberechnen zukünftiger Fahrsituationen des Kraftfahrzeugs durch Auswertung der Egodaten und der Umfelddaten durch das Fahrerassistenzsystem,
- Überprüfen, ob eine zumindest von den zukünftigen Fahrsituationen abhängige Umschaltbedingung erfüllt ist, durch das Fahrerassistenzsystem,
- temporäreres Umschalten in den zweiten Betriebsmodus des Fahrerassistenzsystems, falls die Umschaltbedingung erfüllt ist,
- autonomes Steuern des Kraftfahrzeugs ohne Eingriffsmöglichkeit des Fahrers zur Fortsetzung des Fahrbetriebs durch das Fahrerassistenzsystem im zweiten Betriebsmodus.

Das Verfahren kann selbstverständlich gleichartig weitergebildet werden wie das beschriebene Kraftfahrzeug.

Weitere Vorteile und Einzelheiten der Erfindung ergeben sich aus den Ausführungsbeispielen sowie den zugehörigen Zeichnungen. Dabei zeigen:
- Fig. 1: eine schematische Darstellung eines Ausführungsbeispiels des erfindungsgemäßen Kraftfahrzeugs,
- Fig. 2: eine schematische Darstellung zur Bestimmung der möglichen Trajektorien im Fahrerassistenzsystem des erfindungsgemäßen Kraftfahrzeugs,
- Fig. 3: eine Verkehrssituation,
- Fig. 4: eine weitere Verkehrssituation,
- Fig. 5: eine dritte Verkehrssituation,
- Fig. 6: eine vierte Verkehrssituation,
- Fig. 7: ein Ablaufdiagramm eines Ausführungsbeispiels des erfindungsgemäßen Verfahrens, und
- Fig. 8: ein Ablaufdiagramm eines weiteren Ausführungsbeispiels des erfindungsgemäßen Verfahrens.

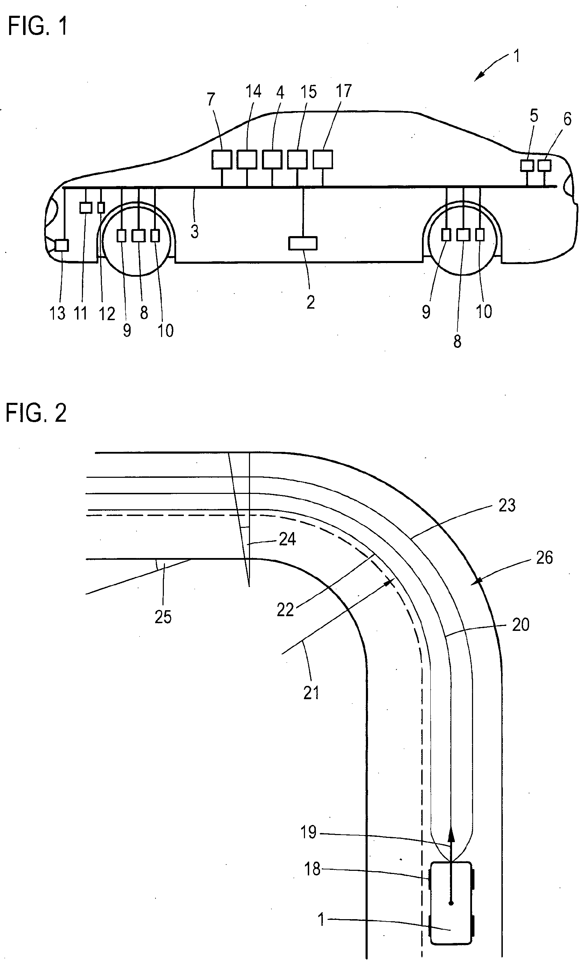

Fig. 1 zeigt ein Kraftfahrzeug 1 mit einem Fahrerassistenzsystem 2, das bei der Ermittlung einer kritischen Situation, wenn sich das Fahrzeug innerhalb eines vorgegebenen Zeitintervalls voraussichtlich im physikalischen Grenzbereich oder jenseits eines Komfortbereichs des Fahrers bewegen wird, zur autonomen Führung des Kraftfahrzeugs 1 ausgebildet ist. Das Kraftfahrzeug 1 ist mit einem Drive-by-Wire-System ausgestattet, so dass im normalen Fahrbetrieb die Lenkbewegungen eines Fahrers durch einen Lenkwinkelsensor 7 erfasst werden und die Lenkbewegungen unter Umständen nach einer Weiterverarbeitung durch ein nicht gezeigtes Steuersystem über den CAN-Bus 3 an die Lenkung 8 übertragen werden. Ebenso können auch Betätigungen eines nicht gezeigten Bremspedals, Gaspedals, eines Bedienelements der Schaltung an die entsprechenden Einrichtungen des Kraftfahrzeugs 1 übertragen werden. Im normalen Fahrbetrieb erfolgt die Führung des Kraftfahrzeugs 1 primär durch den Fahrer. So kann der Fahrer entweder das Kraftfahrzeug vollständig führen oder der Fahrer kann bei der Führung des Kraftfahrzeugs durch Fahrerassistenzsysteme wie beispielsweise eine automatische Abstandsregelung, einen Spurassistenten oder Ähnliches, unterstützt werden. Wesentlich ist, dass in einem ersten Betriebsmodus, der einen üblichen Fahrbetrieb darstellt, der Fahrer stets die vollständige Kontrolle über das Fahrzeug hat, das heißt, unterstützende Fahrerassistenzsysteme jederzeit übersteuern kann.

Während des Betriebs des Kraftfahrzeugs 1 kann das Fahrerassistenzsystem 2 über den CAN-Bus 3 stets Informationen einer Vielzahl von Fahrzeugsystemen abfragen, um zukünftige Fahrsituationen des Kraftfahrzeugs 1 für ein vorgegebenes Zeitintervall vorauszuberechnen. Das Fahrerassistenzsystem 2 kann Daten eines Navigationssystems 4 nutzen, um eine geplante Route des Kraftfahrzeugs 1 zu ermitteln und weitere Informationen über den Straßenverlauf, beispielsweise eine Neigung oder eine Steigung der Straße, Kurvenradien, örtliche Verkehrsregeln und Ähnliches abzufragen. Die aus dem Navigationssystem 4 gewonnenen Daten können zudem durch Daten eines Umfeldsensors 13, der als Kamera ausgeführt ist, ergänzt werden. Im Kraftfahrzeug ist zudem eine Positionsbestimmungseinrichtung 5 zur Bestimmung der Fahrzeugposition, beispielsweise ein GPS-Sensor, vorgesehen.

Über eine Kommunikationseinrichtung 6 kann das Fahrerassistenzsystem 2 zudem weitere Umfeldinformationen gewinnen, indem es beispielsweise mit weiteren Kraftfahrzeugen über eine Car-2-Car-Kommunikation oder mit Infrastruktureinrichtungen und/oder anderen Kraftfahrzeugen durch eine Car-2-X-Kommunikation kommuniziert. Damit können direkt Informationen über das Fahrverhalten weiterer Kraftfahrzeuge und Ähnliches gewonnen werden, um ein verbessertes Umfeldmodell zu berechnen. Über die Kommunikationseinrichtung 6 kann auch eine drahtlose Kommunikation mit Datenbanken, insbesondere Internetdatenbanken, erfolgen, um das Umgebungsmodell zu ergänzen.

Das Fahrerassistenzsystem 2 ist zudem dazu ausgebildet, eine Vielzahl von Sensoren auszulesen, die einen Parameter des Kraftfahrzeugs 1 messen. So können die Stellung eines automatischen Getriebes 12 und/oder die Parameter einer Motorsteuerung 11 ausgelesen werden. Aus den Daten eines Lenkwinkelsensors 7 sowie an einer Lenkung 8 angeordneter Sensoren kann ein Lenkwinkel des Kraftfahrzeugs 1 bestimmt werden. Weitere Sensoren sind Sensoren am Bremssystem 10 oder Rotationssensoren 9 an den Rädern.

Aus den zahlreichen Egodaten des Kraftfahrzeugs 1 und den zahlreichen ermittelten Umfelddaten kann ein Dynamikmodell für das eigene Kräftfahrzeug sowie ein detailliertes Umfeldmodell errechnet werden, wobei insbesondere die Bewegung von weiteren Kraftfahrzeugen durch ein weiteres Dynamikmodell prognostiziert werden kann. Das Fahrerassistenzsystem 2 kann mögliche zukünftige Fahrsituationen dadurch ermitteln, dass mehrere mögliche Trajektorien für das Kraftfahrzeug 1 ermittelt werden. Solche Trajektorien können insbesondere auf einer durch das Fahrerassistenzsystem 2 ermittelten Sollroute des Kraftfahrzeugs verlaufen. Die zeitliche oder örtliche Länge der Trajektorien kann von der Verkehrsdichte und/oder der Fahrzeuggeschwindigkeit abhängen.

Solche Trajektorien können bestimmt werden, indem zunächst ein Fahrbereich für das Kraftfahrzeug 1 ermittelt wird, in dem ein Fahrbetrieb des Kraftfahrzeugs 1 möglich ist. In diesem Bereich werden zunächst Trajektorien bestimmt, die durch das Kraftfahrzeug 1 geometrisch befahrbar sind und anschließend können Geschwindigkeitsprofile für diese Trajektorien ermittelt werden. Alternativ ist es hier auch möglich, Trajektorien direkt als Trajektorien zu berechnen, die sowohl Orts- als auch Geschwindigkeitsdaten, sowie unter Umständen weitere Parameter umfassen.

Aus den so berechneten Trajektorien kann auf vielfältige Weise bestimmt werden, ob eine kritische Fahrsituation für das Kraftfahrzeug zu erwarten ist. Insbesondere kann aus den möglichen Trajektorien wenigstens ein Grenzwert für einen Fahrzeugparameter, insbesondere die Fahrzeuggeschwindigkeit, bestimmt werden und bei Überschreiten dieses Grenzwertes, beispielsweise bei Überschreiten einer aus den Trajektorien bestimmten maximalen Geschwindigkeit, ein kritischer Zustand festgestellt werden und in den zweiten Betriebsmodus gewechselt werden, in dem der Betrieb des Kraftfahrzeugs autonom ohne Eingriffsmöglichkeit durch den Fahrer erfolgt. Alternativ oder ergänzend kann das Fahrerassistenzsystem 2 die Trajektoriendaten auch direkt auswerten. Insbesondere wird ausgewertet, ob ein durch die Trajektorien bedeckter Bereich, also ein Fahrschlauch, eine gewisse Mindestbreite aufweist oder ob eine gewisse Mindestanzahl beabstandeter Trajektorien durch das Kraftfahrzeug fahrbar ist. Wird die Mindestanzahl an Trajektorien beziehungsweise die Mindestbreite des Fahrschlauchs unterschritten und wurde zumindest eine fahrbare Trajektorie ermittelt, so wechselt das Fahrerassistenzsystem 2 in den zweiten Betriebsmodus. Im zweiten Betriebsmodus erfolgt die Steuerung der Lenkung 8, des Bremssystems 10, des Motors 11 sowie des automatischen Getriebes 12 autonom durch das Fahrerassistenzsystem 2, derart, dass das Kraftfahrzeug 1 entlang einer Steuertrajektorie bewegt wird, die durch die Steuereinrichtung 2 aus den fahrbaren Trajektorien gewählt wird.

Es kann auch ermittelt werden, ob überhaupt eine sicher fahrbare Trajektorie für das Kraftfahrzeug möglich ist. Ein "Nichtfinden" einer fahrbaren Trajektorie kann verschiedene Ursachen haben. So können bei der Bestimmung der fahrbaren Trajektorie Grenzwerte genutzt werden, die von einem Komfortbereich des Fahrers abhängen. Der Komfortbereich des Fahrers kann über ein Bedienelement 14 voreingestellt werden. Im laufenden Betrieb des Kraftfahrzeugs 1 kann das Fahrerassistenzsystem 2 zudem die durch den Fahrer gefahrenen Trajektorien auswerten und den Komfortbereich entsprechend anpassen. Ein Nichtauffinden einer fahrbaren Trajektorie bedeutet dann nur, dass der Komfortbereich des Fahrers verlassen werden muss. Es können dann andere Grenzwerte festgelegt werden, die immer noch sicherstellen, dass die ermittelte Trajektorie physikalisch fahrbar ist, wobei eine Fahrt des Kraftfahrzeugs 1 entlang dieser Trajektorie jedoch jenseits des Komfortbereich des Fahrers liegt, also beispielsweise relativ große seitliche Beschleunigungen auftreten.

Ein Nichtermitteln einer fahrbaren Trajektorie kann jedoch auch darauf zurückzuführen sein, dass keine sicher fahrbare Trajektorie in einem vordefinierten Fahrbereich existiert. In diesem Fall kann das Fahrerassistenzsystem 2 sichere Trajektorien berechnen, indem der Fahrbereich neu definiert wird und beispielsweise neben der Fahrbahn liegende Bereiche zum Fahrbereich hinzugenommen werden und anschließend neue Trajektorien bestimmt werden.

Es ist jedoch auch möglich, dass, insbesondere bei einem unerwarteten Auftreten einer Verkehrssituation, keine Trajektorie berechnet werden kann, bei der ein sicheres Fahren möglich ist. So sind abhängig von einem Fahrverhalten weiterer Kraftfahrzeuge unter Umständen Situationen möglich, in denen ein Unfall durch das eigene Kraftfahrzeug 1 nicht vermieden werden kann. In diesen Fällen ist es möglich, dass das Fahrerassistenzsystem 2 in einen dritten Betriebsmodus wechselt, in dem es eine Notfalltrajektorie der Art berechnet, dass Schäden an Personen, an dem eigenen Kraftfahrzeug und Drittfahrzeugen minimiert werden.

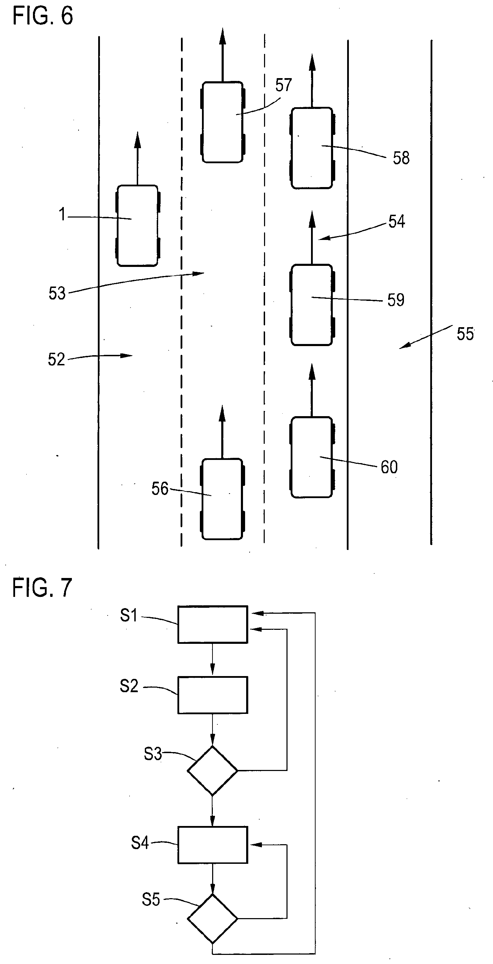

Die Ermittlung von Trajektorien für das Kraftfahrzeug 1 und die Auswertung dieser Trajektorien bezüglich der Erfüllung von Umschaltbedingungen in verschiedenen Betriebsmodi werden später mit Bezug auf die in Fig. 2 bis Fig. 5 gezeigten Fahrsituationen erläutert. Die entsprechenden Verfahren zur Steuerung eines Kraftfahrzeugs werden mit Bezug auf Fig. 7 beschrieben.

Das Fahrerassistenzsystem 2 kann die Daten eines Fahrerzustandserfassungsmittels 17 auswerten. Das Fahrerzustandserfassungsmittel 17 ist als Kamera ausgebildet, die ein Bild des Fahrers aufnimmt und beispielsweise den Lidschlag oder eine Sitzposition des Fahrers erfasst und daraus auf einen Fahrerzustand schließt. Weitere Informationen über einen Fahrerzustand können durch Auswertung von Lenkbewegungen oder anderen Steuereingriffen des Fahrers ermittelt werden. Das Fahrerassistenzsystem 2 kann mit Hilfe dieser Eingabedaten einen Fahrerzustand erkennen und insbesondere ermitteln, wenn ein Fahrer nicht fahrtüchtig ist. Eine solche Fahruntüchtigkeit des Fahrers kann beispielsweise durch Erkrankungen, insbesondere einen Herzinfarkt oder eine Übermüdung des Fahrers begründet sein.

Wird ein solcher Fahrerzustand festgestellt, dann soll das Kraftfahrzeug 1 typischerweise nicht weiterbetrieben werden. Ein direktes Abstellen des Kraftfahrzeugs 1 würde jedoch zu einem Stehenbleiben des Kraftfahrzeugs in einer potentiell verkehrsungünstigen Position führen. Daher ist das Fahrerassistenzsystem 2 bei Ermittlung eines Fahrerzustandes, der auf eine Fahruntüchtigkeit des Fahrers hinweist, dazu ausgebildet, in einen vierten Betriebsmodus zu wechseln, in dem es das Kraftfahrzeug autonom zu einer sicheren Abstellposition steuert. Eine solche sichere Abstellposition kann beispielsweise ein Standstreifen einer Autobahn, ein Parkplatz oder Ähnliches sein. Insbesondere wenn ein krankheitsbedingter fahruntüchtiger Zustand des Fahrers ermittelt wird, kann ist es auch möglich, dass das Fahrerassistenzsystem 2 ein Notrufsignal über die Kommunikationseinrichtung 6 sendet.

Ein sicheres Abstellen des Kraftfahrzeugs soll möglichst zeitnah erfolgen. In zahlreichen Verkehrssituationen, insbesondere bei einem Fahren auf der Überholspur einer Autobahn, kann ein Weg zu einer sicheren Abstellposition jedoch durch weitere Verkehrsteilnehmer blockiert sein. Das Fahrerassistenzsystem 2 kann in diesem Fall durch Auswertung der Umfelddaten Sollfahrmanöver für weitere Kraftfahrzeuge ermitteln und diese über die Kommunikationseinrichtung 6 an diese Kraftfahrzeuge übertragen. Es ist dabei möglich, dass mit dem Sollfahrmanöver eine Prioritätsinformation übertragen wird, die den weiteren Kraftfahrzeugen anzeigt, dass eine Notsituation vorliegt, und der Fahrer des Kraftfahrzeugs 1 sich in einem fahruntüchtigen Zustand befindet.

Dementsprechend wechselt das Fahrerassistenzsystem des Kraftfahrzeugs 1 bei Empfang eines Sollfahrmanövers mit einer entsprechenden Priorität durch die Kommunikationseinrichtung 6 in einen fünften Betriebsmodus des Fahrerassistenzsystems 2, in dem das empfangene Sollfahrmanöver, soweit dies sicher möglich ist, durchgeführt wird. Durch die Nutzung von Prioritätsinformationen und die Übertragung von Sollfahrmanövern ist es möglich, ein Kraftfahrzeug 1 bei einem fahruntüchtigen Zustand des Fahrers besonders schnell und besonders sicher abzustellen.

Die Kommunikationseinrichtung 6 zur Kommunikation mit weiteren Fahrzeugen kann auch in Fällen genutzt werden, in denen andere kritische Fahrsituationen ermittelt werden. Im einfachsten Fall kann das Fahrerassistenzsystem 2 beim Wechsel in einen zweiten oder dritten Betriebsmodus, in dem die Steuerung des Kraftfahrzeugs autonom erfolgt, da eine kritische Situation prognostiziert ist, die Kommunikationseinrichtung 6 zur Übertragung eines Warnsignals an weitere Kraftfahrzeuge ansteuern. Zur Warnung des Fahrers selbst beim Wechsel in den oder aus dem autonomen Fahrbetrieb ist eine Hinweiseinrichtung 15 vorgesehen, die den Fahrer akustisch benachrichtigt.

Fig. 2 zeigt eine Fahrsituation, in der sich das Kraftfahrzeug 1 auf eine Kurve 26 zubewegt. Anhand dieser Darstellung soll beispielhaft eine Möglichkeit zur Ermittlung möglicher Trajektorien für das Kraftfahrzeug erläutert werden. Dem Fahrerassistenzsystem 2 des Kraftfahrzeugs 1 stehen eine Vielzahl von Egoinformationen des Kraftfahrzeugs zur Verfügung. Neben Informationen über eine geplante Route des Kraftfahrzeugs 1, die insbesondere eine Bewegung eines Kraftfahrzeugs über einen längeren Zeitraum beschreiben, umfassen diese Egodaten Daten über den Ist-Zustand des Kraftfahrzeugs wie die Eigengeschwindigkeit des Kraftfahrzeugs 1, deren Betrag und Richtung durch den Pfeil 19 angedeutet ist, einen Winkel zwischen Kraftfahrzeug 1 und Straßenverlauf sowie einen Winkel zwischen Kraftfahrzeug 1 und Bewegungsrichtung, den sogenannten Schwimmwinkel, die Fahrzeugmasse, die Position des Fahrzeugschwerpunkts sowie Informationen über die einzelnen Räder 18, insbesondere einen Lenkwinkel der Räder 18, die Winkelgeschwindigkeit der Räder 18 sowie die Reibungskoeffizienten der Räder 18. Auch Informationen über die weiteren Parameter des Kraftfahrzeugs, wie eine maximale Beschleunigungs- und Bremsleistung, können in Berechnungen mit eingehen. Eine Vielzahl dieser Parameter kann durch Sensoren im Kraftfahrzeug 1 ermittelt werden, es ist jedoch auch möglich, dass einzelne Parameter, beispielsweise die Reibungskoeffizienten von Reifen oder die maximale Verzögerung und Beschleunigung, bereits im Kraftfahrzeug 1 gespeichert sind.

Neben den Egodaten ist zur Berechnung der möglichen Trajektorien ein möglichst exaktes Umfeldmodell notwendig. Parameter des Umfeldes können beispielsweise einer in das Navigationssystem 4 integrierten Datenbank entnommen werden, es ist jedoch auch möglich, weitere fahrzeuginterne Daten oder externe Datenbanken zu nutzen. Solche gespeicherten Daten können durch Daten der Fahrzeugsensoren, insbesondere durch Kameradaten, ergänzt werden.

In der in Fig. 2 gezeigten Verkehrssituation sind zunächst keine weiteren Kraftfahrzeuge oder andere bewegte Hindernisse vorhanden. Hier wird ausschließlich auf die Bestimmung eines Umfeldmodells ohne bewegte Hindernisse und die Berechnung von Trajektorien für diesen Fall eingegangen werden. Daher werden als Umfelddaten zunächst ausschließlich Umfelddaten, die die Fahrbahn betreffen, berücksichtigt. Eine Fahrbahn kann durch einen lokalen Krümmungsradius 21 der Fahrbahn, eine lokale Fahrbahnneigung 24 und eine lokale Fahrbahnsteigung 25 beschrieben werden. Ausgehend von diesen Daten und den Egodaten des Kraftfahrzeugs können mögliche Trajektorien auf vielfältige Weise berechnet werden. Im Folgenden soll als einfaches Beispiel eine Berechnung der Trajektorien genutzt werden, bei der Trajektorien zunächst als reine Ortskurven bestimmt werden, für die in einem separaten Schritt zumindest ein mögliches Geschwindigkeitsprofil bestimmt wird. Selbstverständlich ist es alternativ möglich, exaktere Verfahren zu Trajektorienberechnungen zu nutzen, die beispielsweise dem Roll- und Nickwinkel des Kraftfahrzeugs berücksichtigen oder auch eine Driftbewegung des Kraftfahrzeugs, also eine Bewegung mit hohem Schwimmwinkel, berechnen können.

Zur rein geometrischen Berechnung von Trajektorien können zunächst die Grenztrajektorien 22 und 23 berechnet werden, die den durch das Fahrzeug befahrbaren Schlauch begrenzen. Diese Grenztrajektorien 22, 23 sind zum einen durch den begrenzten maximalen Lenkwinkel des Kraftfahrzeugs 1 und zum anderen durch den Fahrbereich bestimmt. In den in Fig. 2 gezeigten Beispiel ist der Fahrbereich so gewählt, dass stets ein Passieren eines entgegenkommenden Kraftfahrzeugs möglich ist, wobei sich das Kraftfahrzeug stets auf der Straße befindet. Die Begrenzungstrajektorien 22, 23 laufen also entfernt vom Kraftfahrzeug im Wesentlichen parallel zu den Begrenzungen der Fahrbahn. Nur in der unmittelbaren Umgebung des Kraftfahrzeugs sind diese Begrenzungstrajektorien 22, 23 gekrümmt, da der Lenkwinkel des Kraftfahrzeugs begrenzt ist. Es ist möglich, dass der Verlauf der Begrenzungstrajektorie 22, 23 vom Fahrbahnverlauf abweicht, wenn der Fahrbahnverlauf plötzliche Richtungsveränderungen aufweist, die einen größeren Winkel aufweisen, als der maximale Lenkwinkel des Kraftfahrzeugs.

Ergänzend wird eine Idealtrajektorie 20 berechnet, die mit einem a*-Verfahren berechnet werden kann. Die geometrisch möglichen Trajektorien können bestimmt werden, indem eine Vielzahl von Zwischentrajektorien zwischen der Idealtrajektorie 20 und den Begrenzungstrajektorien 22, 23 bestimmt werden. Hierbei können die Lenkwinkel im Bereich der Istposition des Kraftfahrzeugs variiert werden, um so einen kontinuierlichen Übergang zwischen den verschiedenen vorbestimmten Trajektorien zu erhalten. Die zwischen den Trajektorien 20, 22, 23 liegenden Trajektorien können jedoch auf vielfältige andere Art ermittelt werden, wobei jedoch insbesondere nur solche Trajektorien ermittelt werden, die maximal eine vorgegebene Zahl von Wendepunkten aufweisen. Trajektorien mit einer Vielzahl von Wendepunkten sind typischerweise nur mit wesentlich geringeren Geschwindigkeiten fahrbar als solche mit einer großen Zahl von Wendepunkten. Daher sind sie für ein Bewegen des Kraftfahrzeugs im physikalischen Grenzbereich nicht wesentlich.

Ergänzend sei angemerkt, dass es auch möglich ist, ausschließlich die Trajektorien 22, 23 vorzuberechnen und den Raum zwischen diesen Trajektorien anschließend durch eine Interpolation zwischen diesen Trajektorien zu füllen. Die geometrischen Trajektorien können entweder als einzelne Trajektorien bestimmt werden, indem Trajektorien mit einem vorgegebenen Abstand, beispielsweise von einigen cm berechnet werden. Es ist jedoch auch möglich, die Trajektorien als eine oder mehrere Trajektorienscharen zu berechnen, die über wenigstens einen Parameter parametrisiert sind. Beispielsweise können Trajektorien über eine Stärke der Krümmung und eine Länge des gekrümmten Bereichs definiert werden oder Ähnliches. Werden bei einer solchen Beschreibung der Trajektorien Wertebereiche für die Parameter vorgegeben, so ist es möglich, eine Vielzahl von Trajektorien sehr kompakt darzustellen.

Den einzelnen berechneten Trajektorien kann dann jeweils ein Geschwindigkeitsprofil zugewiesen werden. Sind die Trajektorien als Trajektorienschar definiert, ist es auch möglich, das Geschwindigkeitsprofil ebenso zu parametrisieren. Das Geschwindigkeitsprofil beschreibt einen Verlauf der Geschwindigkeiten des Kraftfahrzeugs 1 bei einer Bewegung entlang der Trajektorie, wobei eine Bewegung entlang der Trajektorien mit diesen Geschwindigkeiten eine oder mehrere Grenzbedingungen erfüllt. Eine entscheidende Grenzbedingung ist hierbei, dass die auf das Kraftfahrzeug 1 in der Kurve wirkende Zentrifugalkraft die Haftreibungskraft zwischen den Reifen 18 des Kraftfahrzeugs 1 und der Straße nicht übersteigt. Die Haftreibungskraft zwischen dem Kraftfahrzeug und der Straße kann im einfachsten Fall aus der Fahrzeugmasse und einem Reibkoeffizienten zwischen Straße und Reifen bestimmt werden. Es ist jedoch auch möglich, beispielsweise Nick- und Rollwinkel des Kraftfahrzeugs zu berücksichtigen, wodurch sich die Normalkräfte auf die einzelnen Reifen des Kraftfahrzeugs voneinander unterscheiden und damit unterschiedliche Reibkräfte für jeden der Reifen 18 des Kraftfahrzeugs 1 vorliegen.

Der Reibungskoeffizient für die Reifen ist abhängig vom Reifentyp für das Kraftfahrzeug festgelegt. Es ist auch möglich, diesen Reibungswert für die Reifen abhängig von der Fahrleistung des Reifens anzupassen oder dynamisch in bestimmten Fahrsituationen zu ermitteln. Ein Reibungswert für die Fahrbahn kann als fester Wert abgeschätzt werden. Es ist jedoch vorteilhaft, diesen Wert abhängig von Informationen beispielsweise eines Navigationssystems und einem oder mehrerer Fahrzeugsensoren anzupassen. Durch eine Kamera oder die Daten eines Navigationssystems wird die Art des Straßenbelags bestimmt. Aus der Art des Straßenbelags kann eine gute Voraussage für den Reibwert ermittelt werden. Zudem können durch eine Kamera beziehungsweise eine Bildauswertung Verunreinigungen der Straße erkannt werden und der lokale Reibungskoeffizient dementsprechend angepasst werden. Zudem können Witterungsbedingungen, insbesondere die Temperatur und die Feuchtigkeit der Straße, berücksichtigt werden.

Durch einen Vergleich der Reibungskraft zwischen dem Kraftfahrzeug 1 und der Straße beziehungsweise den einzelnen Reifen 18 und der Straße mit den auftretenden Zentrifugalkräften für die Trajektorien können Grenzgeschwindigkeiten bestimmt werden, für die die Reibkraft und die Zentrifugalkraft gleich ist. Vorteilhaft können jedoch auch zusätzliche Beschleunigungen durch ein Beschleunigen oder Bremsen des Kraftfahrzeugs bei diesem Vergleich mit berücksichtigt werden. Der Betrag der Vektorsumme von Längs- und Querbeschleunigung des Kraftfahrzeugs multipliziert mit dessen Masse darf dabei die Reibkraft nicht überseigen. Dies entspricht dem Prinzip des Kammschen Kreises. Typischerweise wird ein Höchstgeschwindigkeitsprofil für eine Trajektorie bestimmt, wobei bei der Bestimmung des Höchstgeschwindigkeitsprofils insbesondere Sicherheitsabstände zwischen den durch die Trajektorie auf das Kraftfahrzeug wirkende Beschleunigungskräften und der Reibkraft vorgesehen werden.

Als Ergebnis liegt im Fahrerassistenzsystem 2 eine Vielzahl von fahrbaren Trajektorien vor, die jeweils eine Ortskurve und ein der Ortskurve zugeordnetes Geschwindigkeitsprofil aufweisen. Aus den so ermittelten Trajektorien kann auf vielfältige Weise ermittelt werden, ob eine kritische Fahrsituation vorliegt. So können Trajektorien, die gewisse Grenzbedingungen, insbesondere eine Anfangsgeschwindigkeit, die kleiner ist als die momentane Geschwindigkeit des Kraftfahrzeugs 1, nicht erfüllen, verworfen werden und anschließend die Zahl der Trajektorien, die ermittelt wurden, beziehungsweise der Wertebereich wenigstens eines Parameters einer Trajektorienschar ermittelt werden.

Ist eine Fahrsituation unkritisch, so ist stets eine Vielzahl von Trajektorien für das Kraftfahrzeug möglich. Je näher sich das Kraftfahrzeug am Rand eines Komfortbereichs beziehungsweise eines physikalischen Grenzbereichs bewegt, desto weniger Trajektorien sind für eine Fahrt innerhalb des Komfortbereichs beziehungsweise innerhalb des physikalischen Grenzbereichs möglich. Damit kann die Zahl der ermittelten Trajektorien unter Berücksichtigung der entsprechenden Grenzbedingungen oder der Breite der Wertebereiche bei einer Ermittlung von parametrisierten Trajektorien genutzt werden um zu ermitteln, ob eine kritische Fahrsituation vorliegt. Alternativ können aus den ermittelten Trajektorien jedoch Grenzwerte für wenigstens einen Ist-Parameter des Kraftfahrzeugs bestimmt werden. Im einfachsten Fall können für jede der Trajektorien die Geschwindigkeitswerte am Startpunkt ausgewertet werden und eine obere Grenze für die Geschwindigkeit des Kraftfahrzeugs 1 dadurch festgelegt werden, dass beispielsweise ein Geschwindigkeitswert genutzt wird, mit dem eine Mindestzahl der Trajektorien fahrbar ist, oder der einen gewissen Prozentsatz des Maximalwertes der Geschwindigkeit der schnellstmöglichen Trajektorie nicht überschreitet.

Da bei der Nutzung von Trajektorien zur Bestimmung des Vorliegens einer kritischen Fahrsituation und damit einer Umschaltbedingung bereits eine Vielzahl von Trajektorien vorliegt, ist es besonders einfach, eine Steuertrajektorie zu bestimmen, da diese aus den bereits berechneten fahrbaren Trajektorien ausgewählt werden kann. Wird bei der Berechnung der Trajektorien jedoch festgestellt, dass keine Trajektorie unter den vorgegebenen Grenzbedingungen möglich ist, so muss eine Notfalltrajektorie berechnet werden, wobei die Grenzbedingungen zur Berechnung der Trajektorien angepasst werden können.

Das Erfüllen der Umschaltbedingung und die Wahl einer Steuertrajektorie soll im Folgenden dargestellt werden. Bewegt sich Kraftfahrzeug 1 mit niedriger Geschwindigkeit, so sind alle Trajektorien zwischen den Begrenzungstrajektorien 22, 23 fahrbar. Die geometrische Form der berechneten Trajektorien ist nur durch die Vorgabe einer maximalen Wendepunktzahl beschränkt. Das Umschaltkriterium ist die Breite der Trajektorienschar am Scheitelpunkt der Kurve 26, also bei niedrigen Geschwindigkeiten der Abstand zwischen den Begrenzungstrajektorien 22 und 23 senkrecht zur Fahrtrichtung.

Bei höheren Geschwindigkeiten des Kraftfahrzeugs 1 werden einige der bei niedrigen Geschwindigkeiten fahrbaren Trajektorien nicht mehr fahrbar. Im physikalischen Grenzbereich sind nur noch eine oder mehrere diskrete Idealtrajektorien fahrbar. Mit zunehmender Geschwindigkeit verengt sich also die geometrische Breite der Trajektorienschar, bis nur noch die Idealtrajektorie 20 fahrbar ist. Unterschreitet die Breite einen vorgegebenen Grenzwert, so wechselt das Fahrerassistenzsystem in den zweiten Betriebsmodus und führt das Kraftfahrzeug 1 autonom entlang der Idealtrajektorie 20.

Nach dem Durchqueren der Kurve 26 ist wieder eine breite Trajektorienschar fahrbar. Damit kann das Fahrerassistenzsystem abhängig von der Verkehrssituation in den ersten Betriebsmodus wechseln.

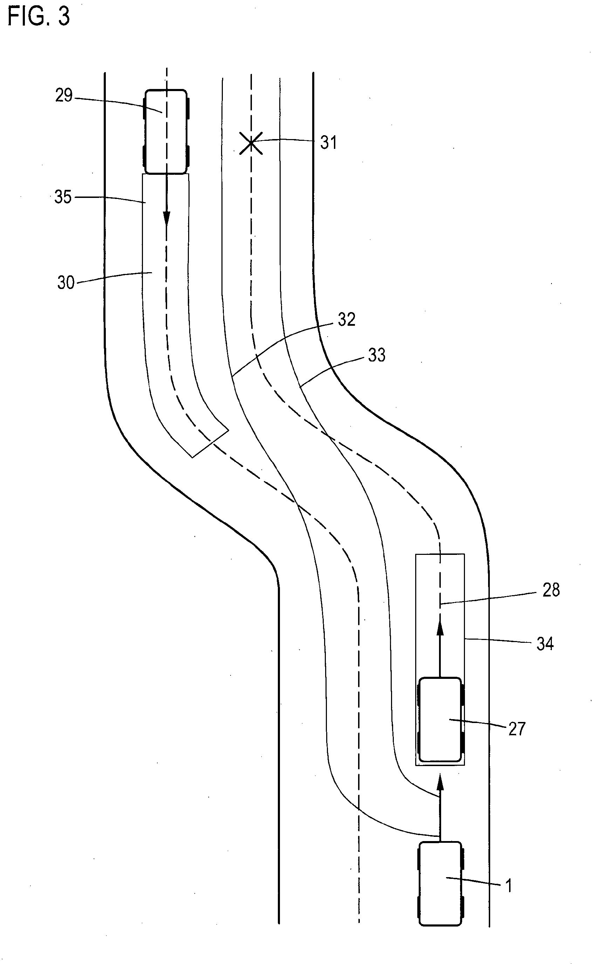

Fig. 3 zeigt eine Verkehrssituation in der der Fahrbereich des Kraftfahrzeugs 1 durch weitere Kraftfahrzeuge 27, 29, die bewegte Hindernisse darstellen, beschränkt wird. Das Fahrerassistenzsystem 2 des Kraftfahrzeugs 1 berechnet für das Kraftfahrzeug 1 eine Zielposition 31, di4e auf der Sollroute des Kraftfahrzeugs liegt. Das Kraftfahrzeug 1 bewegt sich mit einer höheren Geschwindigkeit als das vor ihm fahrende Kraftfahrzeug 27. Bewegt sich das Kraftfahrzeug 1 trotz eines relativ geringen Abstands zu Kraftfahrzeug 27 weiterhin mit erhöhter Geschwindigkeit, so ist davon auszugehen, dass der Fahrer des Kraftfahrzeugs 1 das Kraftfahrzeug 27 überholen möchte. Das Fahrerassistenzsystem 2 muss in diesem Fall ermitteln, ob ein Überholen des Kraftfahrzeug 27 möglich ist und ob dies unter Umständen zu einer kritischen Fahrsituation führt. Durch die Nutzung der Sensorsysteme des Kraftfahrzeugs 1 und bekannte Algorithmen zur Bewegungsprädiktion können eine Trajektorie 28 für das Kraftfahrzeug 27 und eine Trajektorie 30 für das Kraftfahrzeug 29 vorausgesagt werden. Zur vereinfachten Darstellung soll davon ausgegangen werden, dass sich das Kraftfahrzeug 1 mit einer im wesentlichen unveränderten Geschwindigkeit weiterbewegt.

Bei einer Weiterbewegung mit gleicher Geschwindigkeit können die Bereiche 34 und 35 bestimmt werden, die von den Kraftfahrzeugen 27 beziehungsweise 29 überstrichen werden, bis das Kraftfahrzeug 1 das jeweilige Kraftfahrzeug passiert hat. Diese Bereiche 34, 35 müssen bei der Berechnung der Trajektorie des Kraftfahrzeugs 1 ausgeschlossen werden, um Kollisionen zu vermeiden. Hier ist anzumerken, dass eine komplexere Berechnung der Trajektorie des Kraftfahrzeugs 1 möglich ist, beispielsweise indem die Trajektorien in einem dreidimensionalen Raum aus zwei Ortskoordinaten einer Zeitkoordinate geplant werden, wobei bewegte Hindernisse Teile dieses dreidimensionalen Raumes blockieren. Ein solches Verfahren erlaubt eine größere Anzahl von Trajektorien zu planen, was in einigen Fällen zu einem verbesserten Fahrverhalten führen kann, jedoch ist eine solche Berechnung wesentlich aufwendiger.

In Fig. 3 ist der Fahrbereich damit durch den Bereich der Straße sowie durch den Ausschluss der Bereiche 34 und 35, die von den Kraftfahrzeugen 27 und 29 überstrichen werden, definiert. Wird die zusätzliche Randbedingung an die geometrischen Bewegungskurven gestellt, dass der Lenkwinkel des Kraftfahrzeugs 1 begrenzt ist, so können die Begrenzungstrajektorien 32 und 33 ermittelt werden. Anschließend können zwischen den Trajektorien 32 und 33 weitere Zwischentrajektorien ermittelt und Geschwindigkeitsprofile bestimmt werden. Hierbei ist zu beachten, dass in diesem Fall weitere Grenzbedingungen an die Geschwindigkeitsprofile zu stellen sind, da ein wesentliches Abweichen der Geschwindigkeiten von den vorgegebenen Werten dazu führt, dass andere Bereiche 34 und 35 von den Kraftfahrzeugen 27 und 29 überstrichen würden. Im gezeigten Beispiel ist zwischen den Begrenzungstrajektorien 32 und 33 ein ausreichend breiter Fahrschlauch vorhanden. Bereits eine geringfügige Erhöhung der Geschwindigkeiten des Fahrzeugs 27 oder 29 könnte jedoch zu einer deutlichen Verringerung der Breite des Fahrschlauchs führen und damit dazu, dass nur noch eine geringe Zahl Trajektorien möglich wäre, wodurch eine kritische Situation festgestellt werden könnte. Im Falle einer kritischen Fahrsituation kann eine der vorbestimmten Trajektorien als Steuertrajektorie ausgewählt werden.

Ergänzend sei angemerkt, dass durch eine Variation der Geschwindigkeit des Kraftfahrzeugs 1 selbstverständlich weitere geometrische Fahrschläuche möglich sind beziehungsweise der gezeigte Fahrschlauch blockiert wird. So würde beispielsweise ein deutliches Verringern der Geschwindigkeit des Kraftfahrzeugs 1 dazu führen, dass der gezeigte Fahrschlauch nicht mehr befahrbar ist, jedoch ein neuer Fahrschlauch möglich wäre, der ein Verbleiben hinter Kraftfahrzeug 27 beschreibt, bis Punkt 31 erreicht ist.

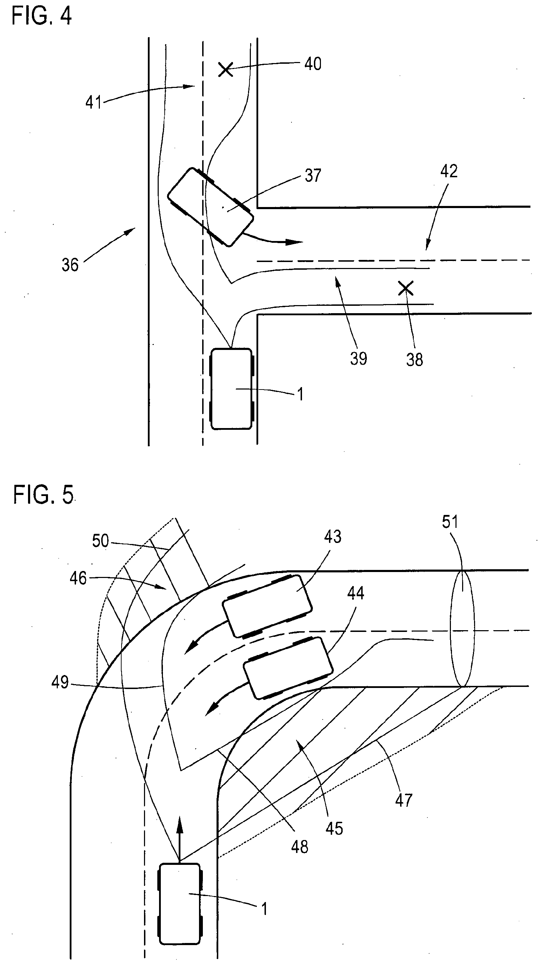

Fig. 4 zeigt eine weitere Verkehrssituation, anhand der dargestellt wird, welchen Einfluss eine Sollroute auf die Bestimmung der möglichen Trajektorien beziehungsweise der Steuertrajektorie hat. In der gezeigten Verkehrssituation bewegt sich das Kraftfahrzeug 1 auf eine Einmündung zu, wobei ein entgegenkommendes Kraftfahrzeug 37 derart in die Einmündung 36 einbiegt, dass der gerade Fahrweg des Kraftfahrzeugs 1 blockiert ist. Die Einmündung mündet in eine Einbahnstraße, die von der Einmündung 36 wegführt. Damit führen beide Spuren der Straße 42 in die gleiche Fahrtrichtung. Das Fahrerassistenzsystem 2 des Kraftfahrzeugs 1 kann in der gezeigten Verkehrssituation getrennte Trajektorienscharen 39 und 41 bestimmen, wobei die Trajektorienschar 39 ein Einbiegen in die Straße 42 beschreibt und die Trajektorienschar 41 eine weitere Bewegung entlang der ursprünglichen Straße. Würde nun die Zielposition zur Bestimmung der Trajektorienscharen beliebig sein, so könnte sowohl die Zielposition 38 als auch die Zielposition 40 ermittelt werden. Würde in diesem Fall durch das Fahrerassistenzsystem des Kraftfahrzeugs 1 eine kritische Situation festgestellt, beispielsweise weil die Geschwindigkeit des Kraftfahrzeugs 1 relativ hoch ist, würde abhängig von den weiteren Bestimmungsparametern für eine Trajektorie entweder eine Trajektorie aus der Trajektorienschar 41 oder aus der Trajektorienschar 39 bestimmt. Damit wäre es möglich, dass das Fahrerassistenzsystem das Kraftfahrzeug autonom auf einen anderen Weg steuert als vom Fahrer gewünscht.

Um eine möglichst große Akzeptanz des Fahrerassistenzsystems zu erreichen, ist es jedoch vorteilhaft, wenn es soweit möglich eine autonome Steuerung des Kraftfahrzeugs derart vornimmt, dass sie vom Fahrer leicht akzeptiert wird, das heißt, dass sie vorzugsweise entlang einer Sollroute, die beispielsweise durch ein Navigationssystem geplant ist oder an einem gesetzten Blinker oder Ähnlichem erkannt wird, verläuft. Erkennt das Fahrerassistenzsystem 2 des Kraftfahrzeugs 1, dass eine nach rechts abbiegende Route geplant ist, so kann die Zielposition 38 bestimmt werden, verläuft die Sollroute jedoch geradeaus, so kann die Zielposition 40 bestimmt werden. Beispielhaft soll davon ausgegangen werden, dass ein Abbiegen in die Straße 42 gewünscht ist. Damit wird also die Zielposition 38 bestimmt. Bei der Berechnung der fahrbaren Trajektorien kann nun zunächst ausschließlich die Trajektorienschar 39 bestimmt werden, da die Trajektorienschar 41 zwar fahrbar ist, jedoch nicht in die gewünschte Richtung führt. Wird nun bei der Auswertung der Trajektorienschar 39 durch das Fahrerassistenzsystem 2 des Kraftfahrzeugs 1 ermittelt, dass eine Umschaltbedingung erfüllt ist, also ein autonomes Fahren des Kraftfahrzeugs erfolgen soll, wird jedoch wenigstens eine Trajektorie ermittelt, auf der eine sichere Fahrt des Kraftfahrzeugs innerhalb der Trajektorienschar 39 möglich ist, so kann diese Trajektorie als Steuertrajektorie bestimmt und gefahren werden. Das Fahrerassistenzsystem 2 greift also minimal in den Fahrbetrieb des Kraftfahrzeugs 1 ein, so dass dem Fahrer zwar kurzzeitig die Führung des Kraftfahrzeugs abgenommen wird, die Führung des Kraftfahrzeugs aber zumindest im wesentlich weiterhin entlang einer vom Fahrer gewünschten Route erfolgt.

Abhängig von der Geschwindigkeit des Kraftfahrzeugs 1 und der weiteren Bewegung des Kraftfahrzeugs 37 kann es sein, dass keine Trajektorie der Trajektorienschar 39 durch das Kraftfahrzeugs 1 befahrbar ist. In diesem Fall kann die Steuereinrichtung 2 eine Randbedingung zur Berechnung der Trajektorien ändern oder aufheben. Im gezeigten Fall kann die Beschränkung der Wahl der Zielposition auf die Straße 42 aufgegeben werden, wodurch sowohl die Trajektorien der Trajektorienschar 39 als auch die Trajektorien der Trajektorienschar 41 berechenbar sind. Im beschriebenen Fall sind die Trajektorien der Trajektorienschar 39 jedoch aufgrund weiterer berücksichtigter Randbedingungen nicht fahrbar, wodurch in diesem Fall das Kraftfahrzeug entlang einer der Trajektorien der Trajektorienschar 41 zur Zielposition 40 geführt werden kann.

Durch das beschriebene Vorgehen kann das Fahrerassistenzsystem 2 des Kraftfahrzeugs 1 flexibel und abgestuft auf die gezeigte Verkehrssituation reagieren. Wird ermittelt, dass alle oder eine Vielzahl der Trajektorien der Trajektorienschar 39 unter den weiteren Randbedingungen fahrbar sind, so greift das Fahrerassistenzsystem 2 nicht in den Fahrbetrieb des Kraftfahrzeugs ein, da zunächst davon ausgegangen wird, dass der Fahrer des Kraftfahrzeugs kontrolliert entlang einer der möglichen Trajektorie steuern kann. Ist jedoch unter den weiteren Randbedingungen nur noch ein geringer Bruchteil der Trajektorien der Trajektorienschar 39 möglich, kann dies als eine kritische Fahrsituation interpretiert werden und das Kraftfahrzeug 1 kann autonom durch das Fahrerassistenzsystem 2 gesteuert werden. Die autonome Steuerung des Kraftfahrzeugs schließt zwar den Fahrer zumindest von der Steuerung des Kraftfahrzeugs aus, wobei die komplette Querführung oder die komplette Längs- und Querführung autonom durch das Kraftfahrzeug durchgeführt werden kann, bewegt das Kraftfahrzeug jedoch weiterhin entlang einer Route, die voraussichtlich den Routenwünschen des Fahrers entspricht. Die kurzfristigen Wünsche des Fahrers werden aus Sicherheitsgründen ignoriert, wobei mittelfristige Fahrziele weiterhin erreicht werden. Wird jedoch bei der Analyse der künftigen Fahrsituationen festgestellt, dass unter den weiteren gegebenen Randbedingungen alle Trajektorien der Trajektorienschar 39 des Kraftfahrzeugs 1 nicht sicher befahrbar sind, erfolgt eine Abweichung vom Fahrerwillen und eine Steuerung des Kraftfahrzeugs entlang einer nicht vom Fahrer gewünschten Route. Mit dieser Steuerung ist es weiterhin möglich, den Fahrbetrieb des Kraftfahrzeugs fortzusetzen, wodurch insbesondere ein Abstellen des Kraftfahrzeugs an einer nicht gewünschten Position verhindert wird. Kann auch nach Anpassung der Randbedingungen keine fahrbare Trajektorie ermittelt werden, so kann in einem dritten Betriebsmodus des Fahrerassistenzsystems 2 eine Notfalltrajektorie berechnet werden, um Kollisionen zu vermeiden oder Kollisionsfolgen zu vermindern.

Fig. 5 zeigt ein Beispiel für eine weitere Verkehrssituation, in der das Kraftfahrzeug 1 entlang einer Straße fährt, auf der beide Spuren von entgegenkommenden Fahrzeugen 43 und 44 blockiert sind. Da beide Spuren vor Kraftfahrzeug 1 blockiert sind, existiert kein durchgängiger Fahrbereich zwischen dem Kraftfahrzeug 1 und dem Bereich 51, in dem die Zielpositionen liegen, die durch eine Trajektorie des Kraftfahrzeugs 1 erreicht werden sollen, solange der Fahrbereich ausschließlich als die Fahrbahn definiert ist. Wird in diesem Fall versucht, fahrbare Trajektorien für das Kraftfahrzeug 1 zu berechnen, so wird ermittelt, dass keine Trajektorie das Kraftfahrzeug 1 zu einer Zielposition im Bereich 51 führt. Die Steuereinrichtung muss somit eine Notfalltrajektorie bestimmen oder zumindest eine der Randbedingungen, die bei der Berechnung der fahrbaren Trajektorien benutzt werden, ändern. Diese Randbedingungen können beispielsweise maximale Beschleunigungen, maximale Bauteilbelastungen oder Ähnliches sein. Besonders vorteilhaft ist es jedoch häufig, einen Fahrbereich anzupassen. In der in Fig. 5 gezeigten Situation kann beispielsweise durch eine Kamera an Kraftfahrzeug 1 ermittelt werden, dass sich in den Bereichen 45 und 46, die neben der Fahrbahn liegen, keine Hindernisse befinden und dass die Oberfläche der Bereiche 45, 46 scheinbar befahrbar ist. Daher können in der gezeigten Situation, in der zunächst keine fahrbare Trajektorie ermittelt werden kann, die Bereiche 45 und 46 zum Fahrbereich hinzugenommen werden, wodurch Trajektorien innerhalb eines durch die Randtrajektorien 47 und 48 begrenzten Fahrschlauchs und innerhalb eines durch die Randtrajektorien 49 und 50 begrenzten Fahrschlauches möglich werden. Das Fahrerassistenzsystem 2 des Kraftfahrzeugs 1 kann nun unter Berücksichtigung weiterer Randbedingungen eine der Trajektorien innerhalb dieser Fahrschläuche auswählen und somit eine sichere Trajektorie zu einem Zielpunkt im Bereich 51 bestimmen.

Wie mit Bezug auf Fig. 1 erläutert wurde ist es auch möglich, dass das Kraftfahrzeug 1 erkennt, wenn ein Fahrer fahrunfähig ist. In diesen Fällen ist es wünschenswert, das Kraftfahrzeug 1 zeitnah abzustellen, dennoch soll zunächst eine sichere Abstellposition erreicht werden. Dies ist dadurch möglich, dass das Fahrerassistenzsystem 2 in einem vierten Betriebsmodus betrieben wird, in dem eine autonome Steuerung des Kraftfahrzeugs bis zu der sicheren Abstellposition erfolgt.

In der in Fig. 6 gezeigten Situation bewegt sich das Kraftfahrzeug 1 zu dem Zeitpunkt, zu dem die Fahruntüchtigkeit des Fahrers festgestellt wird, auf einer Überholspur 52 einer Autobahn. Als sichere Abstellposition soll eine Position auf der Standspur 55 erreicht werden. Während der autonomen Fahrt des Kraftfahrzeugs ist es damit notwendig, die mittlere Spur 53 sowie die rechte Spur 54 zu überqueren. Auf der mittleren Spur 53 bewegen sich die Kraftfahrzeuge 56 und 57, auf der rechten Spur 54 die Kraftfahrzeuge 58, 59, 60. Damit ist eine typische Fahrsituation auf Autobahnen gezeigt, bei der auf der rechten Spur 54 und der mittleren Spur 53 die Verkehrsdichte hoch ist. In solchen Fällen können lange Zeiträume notwendig sein, um ein Kraftfahrzeug 1 auf die Standspur 55 zu bewegen.

Um ein schnelleres Abstellen des Kraftfahrzeugs 1 in dieser Situation zu ermöglichen, kann das Fahrerassistenzsystem 2 eine Kommunikationseinrichtung 6 des Kraftfahrzeugs 1 ansteuern, um Sollfahrmanöver an die Kraftfahrzeuge 56, 57, 58, 59 und 60 zu übermitteln. Mit dem Sollfahrmanöver kann insbesondere eine Prioritätsinformation übertragen werden die anzeigt, dass sich das Kraftfahrzeug 1 in einer Notsituation befindet, wodurch veranlasst wird, dass die Kraftfahrzeuge 56, 57, 58, 59 und 60 dem übertragenen Sollfahrmanöver soweit möglich folgen.

Fig. 7 zeigt die grundlegende Struktur eines Verfahrens zur Steuerung eines Kraftfahrzeugs. Im normalen Fahrbetrieb des Kraftfahrzeugs, das heißt während das Kraftfahrzeug vom Fahrer geführt beziehungsweise derart von Fahrerassistenzsystemen geführt wird, dass der Fahrer jederzeit die Steuereingriffe der Fahrerassistenzsysteme übersteuern kann, werden im Schritt S1 kontinuierlich Egodaten und Umfelddaten erfasst. Dabei können eine Vielzahl von Informationen über die Fahrbahn und das Umfeld der Fahrbahn, insbesondere Fahrbahnneigungen, Steigungen, Kurvenradien, Fahrbahnbreiten sowie Informationen, die Rückschlüsse auf die Reibungskoeffizienten der Straße ermöglichen, erfasst werden. Diese Daten können nach Bestimmung der Position des Kraftfahrzeugs lokalen Datenbanken oder Datenbanken, auf die drahtlos zugegriffen wird, entnommen werden. Insbesondere kann die Datenbank eines Navigationssystems genutzt werden. Daneben können gespeicherte oder durch im Kraftfahrzeug angeordnete Sensoren erfasste Egodaten des Kraftfahrzeugs erfasst werden. Auch die Daten von bewegten Hindernissen, insbesondere von weiteren Kraftfahrzeugen oder Fußgängern können erfasst werden, wobei künftige Bewegungen von bewegten Hindernissen durch ein Bewegungsmodell abgebildet werden.

Aus den in Schritt S1 gesammelten und bestimmten Daten werden im Schritt S2 für eines vorgegebenen Zeitintervalls zukünftige Fahrsituationen des Kraftfahrzeugs bestimmt. Für die Bestimmung der zukünftigen Fahrsituationen werden mehrere mögliche Trajektorien für das Kraftfahrzeug berechnet.

In Schritt S3 wird überprüft, ob eine Umschaltbedingung erfüllt ist. Die Umschaltbedingung hängt zumindest von den zuköünftigen Fahrsituationen ab. So kann erkannt werden, dass sich das Kraftfahrzeug zukünftig nahe an einem physikalischen Grenzbereich bewegen wird. Alternativ kann erkannt werden, dass eine Führung des Kraftfahrzeugs in zukünftigen Fahrsituationen nur derart möglich ist, dass sie am Rand eines Komfortbereichs eines Fahrers liegt. Die Umschaltbedingung ist von Fahrsituationen und optional von einer Eigenschaft des Fahrers abhängig. Ist eine solche Umschaltbedingung in Schritt S3 nicht erfüllt, wird das Verfahren ab Schritt S1 wiederholt.

Wird die Umschaltbedingung in Schritt S3 jedoch erfüllt, so erfolgt ein temporäres Umschalten in den zweiten Betriebsmodus des Fahrerassistenzsystems. In diesem zweiten Betriebsmodus wird das Kraftfahrzeug autonom, das heißt ohne Eingriffsmöglichkeit des Fahrers, gelenkt. Die Steuerung des Kraftfahrzeugs erfolgt so, dass der Fahrbetrieb soweit wie möglich fortgesetzt wird, das heißt, dass das Kraftfahrzeug zumindest solange weiter bewegt wird, bis eine kritische Situation überwunden ist. Während des autonomen Fahrens wird in Schritt S5 geprüft, ob eine Rückschaltbedingung zum Rückschalten in den ersten Betriebsmodus erfüllt ist. Eine Rückschaltbedingung ist, dass die Umschaltbedingung nicht erfüllt ist, das heißt, dass die kritische Fahrsituation überwunden ist, und dass die Umfeld- und Egodaten des Kraftfahrzeugs anzeigen, dass eine sichere Rückübergabe der Fahrzeugführung an den Fahrer möglich ist. Ist die Rückschaltbedingung nicht erfüllt, wird der autonome Fahrbetrieb in Schritt S4 fortgesetzt. Falls die Rückschaltbedingung erfüllt ist, erfolgt die weitere Fahrt des Kraftfahrzeugs wieder unter der Führung des Fahrers. Dabei wird ein nicht gezeigter zusätzlichen Schritt eingeführt, in dem eine Rückübernahmeaufforderung an den Fahrer ausgegeben wird und erst nach Erkennen einer Fahreraktion, die eine Rückübernahme anzeigt, die Führung des Kraftfahrzeugs an den Fahrer zurückgegeben wird.

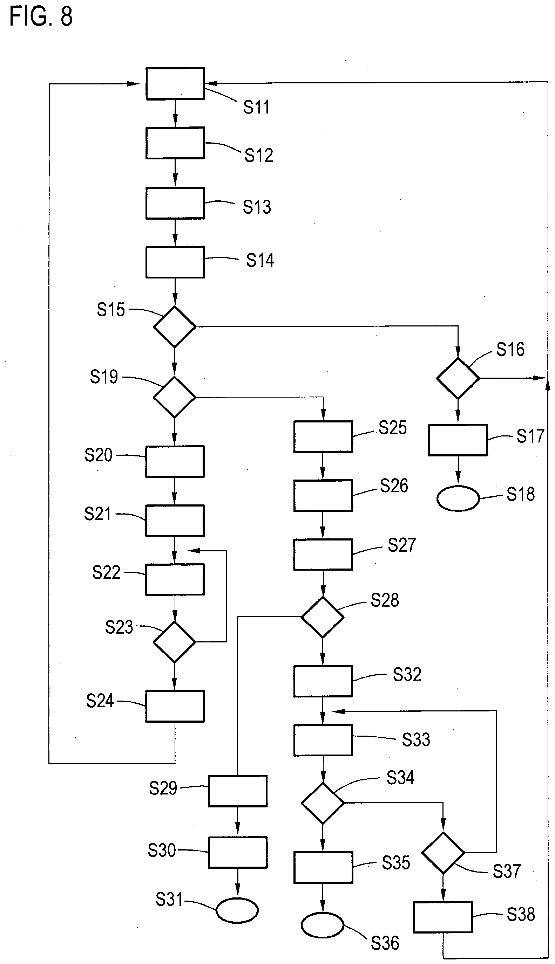

Fig. 8 zeigt ein weiteres Ausführungsbeispiel eines Verfahrens zur Steuerung eines Kraftfahrzeugs. Wie für den Fachmann offensichtlich erkennbar, sind einige der gezeigten Schritte optional und stellen vorteilhafte Ausprägungen des Verfahrens dar.

Wie bereits zu Fig. 7 beschrieben wurde, erfolgt der Betrieb des Kraftfahrzeugs auch beim in Fig. 8 gezeigten Verfahren typischerweise so, dass das Kraftfahrzeug durch den Fahrer geführt ist. Während dieses Betriebs wird in Schritt S11, wie zu Schritt S1 der Fig. 7 erläutert wurde, eine Vielzahl von Ego- und Umfelddaten gesammelt, sowie Bewegungsmodelle für bewegte Hindernisse erstellt und ausgewertet. Im Schritt S12 wird aus den in Schritt S11 ermittelten Daten ein Fahrbereich zwischen der Ist-Position des Kraftfahrzeugs und dem Bereich, in dem eine oder mehrere Zielpositionen liegen, ermittelt. Der Fahrbereich umfasst die gesamte Fahrbahn oder bestimmte Spuren der Fahrbahn, wobei Bereiche ausgenommen sind, die durch feste oder bewegte Hindernisse blockiert sind.

In Schritt S13 wird eine Vielzahl von Trajektorien in dem in Schritt S12 bestimmten Bereich bestimmt. Die Bestimmung der Trajektorien erfolgt unter Auswertung bestimmter Randbedingungen, die sich aus den Ego- und Umfelddaten ergeben und insbesondere die Trajektorien auf den Fahrbereicheinschränken, berechnet. Weitere Randbedingungen zur Berechnung der Trajektorien können beispielsweise maximale Beschleunigungen für das Kraftfahrzeug sein, die sich aus einer Reibungskraft zwischen Straße und Reifen ergeben. Ergänzend ist es auch möglich, bei der Bestimmung der Grenzbedingungen Eigenschaften des Fahrers zu berücksichtigen. Beispielsweise ist es möglich, dass ein Fahrer vor Fahrtantritt ein sportliches oder komfortables Fahrverhalten des Kraftfahrzeugs eingestellt hat. Entsprechend dieser Einstellung kann auch der mögliche Parameterbereich der Trajektorien eingeschränkt werden. Die Berechnung der Trajektorien kann zunächst durch ein reines Berechnen von Ortskurven und ein anschließendes Bestimmen von Geschwindigkeitsprofilen entlang dieser Ortskurven erfolgen, es können jedoch auch Trajektorien berechnet werden, die bereits Orte und Geschwindigkeiten beziehungsweise Orte und Zeiten umfassen und die zudem weitere Parameter umfassen können. Trajektorien werden einzeln oder als parametrisierte Trajektorienscharen mit zugeordneten Wertebereichen für die Parameter berechnet.

In Schritt S14 können einzelne Trajektorien verworfen beziehungsweise Wertebereiche von Trajektorienscharen ausgeschlossen werden, die gewisse zusätzliche Randbedingungen nicht erfüllen. Insbesondere wenn in Schritt S13 aufwändige Berechnungsverfahren für die Trajektorien benutzt werden, die eine Vielzahl von Parametern berücksichtigen, ist es häufig vorteilhaft zunächst einige Randbedingungen nicht anzuwenden und Trajektorien, die diese Randbedingungen nicht erfüllen, anschließend in Schritt S14 auf der Menge der berechneten Trajektorien zu entfernen. Es ist jedoch auch möglich, dass zunächst in Schritt S13 Trajektorien unter relativ weiten Randbedingungen, beispielsweise der Randbedingung, dass die Trajektorie physikalisch fahrbar ist, berechnet werden und in Schritt S14 engere Randbedingungen genutzt werden, beispielsweise, dass eine Trajektorie innerhalb eines Komfortbereichs eines Fahrers fahrbar ist. Damit kann eine Obermenge und eine Untermenge von Trajektorien gebildet werden, wobei zunächst versucht wird, das Kraftfahrzeug innerhalb der Untermenge der Trajektorien zu bewegen, wobei es möglich ist, den Trajektorienraum falls notwendig auf die Obermenge zu erweitern.

In Schritt S15 wird überprüft, ob ein Umschaltkriterium durch die Schritte S13 und S14 bestimmten Trajektorien erfüllt ist. Ein solches Umschaltkriterium kann insbesondere die Breite von Fahrschläuchen oder die Menge der Trajektorien betreffen. Im einfachsten Fall kann die Anzahl der berechneten Trajektorien mit einem Grenzwert verglichen werden. Dies ist insbesondere möglich, wenn die Parameter der Trajektorien zuvor diskretisiert wurden, das heißt kontinuierliche Trajektorienscharen durch eine Mehrzahl von Einzeltrajektorien dargestellt werden, die im Parameterraum beabstandet sind. Dadurch werden also jeweils eine gewisse Menge nahe beieinanderliegender Trajektorien als äquivalent betrachtet und durch eine einzelne Trajektorie repräsentiert. Alternativ ist es jedoch möglich, dass in Schritt S13 bis S14 Trajektorienscharen, das heißt insbesondere parametrisierte Fahrschläuche, berechnet wurden, wobei in diesem Fall die Wertbreite eines Parameters oder mehrerer Parameter betrachtet werden kann. Im einfachsten Fall kann hier die geometrische Weite der breitesten Trajektorie am engsten Punkt untersucht werden. Wenn mehrere Trajektorien vorliegen, können die einzelnen Breiten der Wertebereiche jedoch auch summiert werden oder es können Phasenraumvolumen für die Trajektorienscharen bestimmt und einzeln betrachtet oder summiert werden.

Ist die Umschaltbedingung in Schritt S15 nicht erfüllt, wird in Schritt S16 zudem überprüft, ob eine Fahruntüchtigkeit des Fahrers vorliegt. Hierzu können Kameradaten oder die Lenkbewegungen des Fahrers ausgewertet werden. Anhand der gewonnenen Daten kann Bewußtlosigkeit oder Müdigkeit des Fahrers erkannt werden. Wird in Schritt S16 keine Fahrunfähigkeit des Fahrers festgestellt, wird das Verfahren ab Schritt S11 fortgesetzt, wodurch die Fahrzeugführung beim Fahrer verbleibt.

Wird eine Fahrunfähigkeit des Fahrers festgestellt, so schaltet das Fahrerassistenzsystem in den vierten Betriebsmodus und in Schritt S17 wird ein autonomer Fahrbetrieb zu einer sicheren Abstellposition eingeleitet. In diesem Schritt ist es zudem möglich, dass bei bewußtlosem oder anderweitig krankem Fahrer ein Notruf abgesetzt wird, Sollfahrmanöver an andere Fahrzeuge gegeben werden, um ein sicheres Abstellen des Kraftfahrzeugs zu ermöglichen oder Ähnliches. Mit Erreichen einer sicheren Abstellposition wird das Kraftfahrzeug in Schritt S18 abgestellt. Damit endet das Verfahren in diesem Fall.

Wird in Schritt S15 festgestellt, dass das Umschaltkriterium erfüllt ist, so schaltet das Fahrerassistenzsystem in den zweiten Betriebsmodus und in Schritt S19 wird ermittelt, ob zumindest eine Trajektorie ermittelt werden konnte, also ob eine sichere Fahrt des Kraftfahrzeugs überhaupt möglich ist. Ist dies der Fall, so kann im Schritt S20 eine Warnung an weitere Kraftfahrzeuge ausgegeben werden, dass das Kraftfahrzeug, da im Schritt S15 bereits ein Umschaltkriterium festgestellt wurde, voraussichtlich in einem physikalischen Grenzbereich betrieben werden wird. Die Ausgabe einer Warnung in Schritt S20 kann dann entfallen, wenn die Umschaltbedingungen in Schritt S15 ausschließlich deshalb erfüllt wurde, weil das Kraftfahrzeug außerhalb des Komfortbereichs eines Fahrers bewegt wird, jedoch weiterhin ein ausreichend großer Abstand vom physikalischen Grenzbereich gewahrt ist. Zudem kann in Schritt S20 eine Hinweiseinrichtung aktiviert werden, um einen Fahrer auf die Aufnahme des autonomen Fahrbetriebs hinzuweisen.

Wurden in den Schritten S13 und S14 mehrere fahrbare Trajektorien ermittelt, so kann in Schritt S21 die Steuertrajektorie aus diesen Trajektorien ausgewählt werden. Wurde nur eine fahrbare Trajektorie ermittelt, so ist dies die ausgewählte Steuertrajektorie. Zur Auswahl der Trajektorie kann eine Vielzahl von Optimierungskriterien genutzt werden. Insbesondere kann ein Sicherheitsabstand zu Hindernissen und dem Fahrbahnrand optimiert werden. Gleichzeitig kann versucht werden, Längs- und/oder Querbeschleunigungen zu minimieren. Mit den Optimierungsbedingungen kann darauf abgezielt werden, eine möglichst sichere Fahrt des Kraftfahrzeugs zu ermöglichen, wobei die gefahrene Trajektorie gleichzeitig eine minimale Abweichung von einem prognostizierten Fahrerwillen aufweist.

In Schritt S22 erfolgt ein Fahrbetrieb entlang der in Schritt S21 ausgewählten Trajektorie, wozu das Fahrerassistenzsystem zumindest die Steuerung des Kraftfahrzeugs, insbesondere aber die gesamte Querführung oder die gesamte Längs- und Querführung des Kraftfahrzeugs, autonom durchführt. Hierbei kann die Trajektorie insbesondere aufgrund von neu ermittelten Umfeld- und Egodaten bei Bedarf angepasst werden.

In Schritt S23 wird überprüft, ob eine Rückschaltbedingung erfüllt ist. Dies erfolgt äquivalent zur Überprüfung der Rückschaltbedingungen in Schritt S5 der Fig. 7. Wird keine Rückschaltbedingung ermittelt, wird das autonome Fahren in Schritt S22 fortgesetzt. Bei Ermittlung der Rückschaltbedingungen erfolgt in Schritt S24 eine Rückgabe der Fahrzeugführung an den Fahrer, wobei dies vielfältig ausgestaltbar ist. Insbesondere kann ein Hinweissignal an den Fahrer gegeben werden, dass eine Rückübergabe erfolgen soll. Eine Rückübergabe kann erst nach einer festgelegten Handlung durch den Fahrer erfolgen.

Nach der Rückübergabe in Schritt S24 schaltet das Fahrerassistenzsystem in den ersten Betriebsmodus, das Verfahren wird in Schritt S11 fortgesetzt und das Kraftfahrzeug wird wieder durch den Fahrer geführt.

Falls in Schritt S19 ermittelt wird, dass keine fahrbare Trajektorie für das Fahrzeug bestimmt werden konnte, wird in Schritt S25 eine Warnung an den Fahrer ausgegeben, da in diesem Fall davon ausgegangen wird, dass ein Unfall unvermeidbar ist oder dass das Kraftfahrzeug mit erweiterten Randbedingungen, also zumindest mit einer Verringerung des Fahrkomforts betrieben werden muss. Im Schritt S26 werden die Randbedingungen zur Bestimmung der Trajektorien angepasst. Wurden in Schritt S13 und S14 die Trajektorien zunächst derart bestimmt, dass die Fahrbahntrajektorien einen Komfortbereich des Fahrers beschreiben, ist es nun möglich die Randbedingungen auf einen physikalischen Grenzbereich zu erweitern. Es ist zudem möglich, dass der Fahrbereich erweitert wird. So können in Fällen, in denen neben einer Fahrbahn keine Hindernisse vorhanden sind, Bereiche neben der Fahrbahn nun zum Fahrbereich hinzugefügt werden.

Nach der Anpassung der Randbedingung wird in Schritt S27 versucht, eine optimale Trajektorie mit den angepassten Randbedingungen zu ermitteln. In Schritt S28 wird überprüft, ob zumindest eine mögliche Trajektorie in Schritt S27 ermittelt wurde. Ist dies nicht der Fall, so ist davon auszugehen, dass keine Trajektorie bestimmt werden kann, mit der eine Beschädigung von Personen, dem Kraftfahrzeug und/oder Drittgegenständen vollständig vermieden werden kann. Daher wechselt das Fahrerassistenzsystem in einen vierten Betriebsmodus und in Schritt S29 wird eine Notfalltrajektorie berechnet mit der Schäden soweit möglich minimiert werden. Die Berechnung von schadensminimierenden Trajektorien bei unvermeidbaren Unfällen ist im Stand der Technik bekannt. Diese Trajektorie kann in Schritt S30 durchgeführt werden und endet typischerweise in Schritt S31 mit dem Stillstand des Kraftfahrzeugs. Da in diesem Fall davon auszugehen ist, dass eine Schadenssituation vorliegt, können in Schritt S31 auch bestimmte Fahrzeugsysteme abgeschaltet werden oder Notrufe abgesetzt werden.

Wird in Schritt S28 ermittelt, dass mit den angepassten Randbedingungen eine fahrbare Trajektorie vorliegt, so können in Schritt S32 vorbereitende Schritte durchgeführt werden, in denen beispielsweise Fahrzeugsysteme wie Fahrwerk oder Differentialsperre entsprechend angepasst werden. Anschließend kann die entsprechend Trajektorie in Schritt S33 durchgeführt werden. Da die Trajektorie typischerweise im Grenzbereich durchgeführt wird, wird in Schritt S34 überprüft, ob ein Problem, insbesondere eine Beschädigung des Kraftfahrzeugs oder eine unerwartete Fahrzeugbewegung aufgetreten ist. In diesem Fall kann mit Schritt S35 das Fahrzeug gezielt gestoppt werden, wodurch das Verfahren mit einem Stillstand des Fahrzeugs in Schritt S36 endet. Wird in Schritt S34 ermittelt, dass das Kraftfahrzeug kontrolliert entlang der Trajektorie geführt wird, kann in Schritt S37 überprüft werden, ob eine Rückschaltbedingung vorliegt. Falls diese nicht vorliegt, wird die Durchführung der Trajektorie in Schritt S33 fortgesetzt. Die Überprüfung der Rückgabebedingung entspricht Schritt S23. Liegt die Rückübergabebedingung vor, so kann in Schritt S38 ebenso wie in Schritt S24 eine Rückübergabe an den Fahrer erfolgen, worauf das Fahrerassistenzsystem in den ersten Betriebsmodus schaltet und das Verfahren in Schritt S11 mit dem normalen Fahrbetrieb fortgesetzt wird.

## Patentansprüche

1. Kraftfahrzeug umfassend wenigstens ein Fahrerassistenzsystem (2) zur Vorausberechnung zukünftiger Fahrsituationen des Kraftfahrzeugs (1) für ein vorgegebenes Zeitintervall durch Auswertung von das Kraftfahrzeug (1) betreffenden Egodaten und das Kraftfahrzeugumfeld betreffenden Umfelddaten, wobei das Kraftfahrzeug (1) in einem ersten Betriebsmodus des Fahrerassistenzsystems (2) durch einen Fahrer steuerbar ist,
**dadurch gekennzeichnet,**
**dass** das Fahrerassistenzsystem (2) bei Erfüllung einer zumindest von den zukünftigen Fahrsituationen abhängenden Umschaltbedingung zum temporären Umschalten in einen zweiten Betriebsmodus, in dem die Steuerung des Kraftfahrzeugs (1) ohne Eingriffsmöglichkeit durch den Fahrer autonom durch das Fahrerassistenzsystem (2) erfolgt, ausgebildet ist, wobei im zweiten Betriebsmodus der Fahrbetrieb fortgesetzt wird, wobei das Fahrerassistenzsystem (2) dazu ausgebildet ist, im zweiten Betriebsmodus eine Prognose, ob an einem in Fahrtrichtung voraus liegenden Wegpunkt die Umschaltbedingung erfüllt ist, zu berechnen und eine Zielposition (31, 41, 42) für den autonomen Fahrbetrieb zu bestimmen, an der die Umschaltbedingung voraussichtlich nicht erfüllt ist.

2. Kraftfahrzeug nach Anspruch 1,
**dadurch gekennzeichnet,**
**dass** das Fahrerassistenzsystem (2) zur Auswertung von Egodaten, insbesondere von Routendaten eines Navigationssystems (4), und Umfelddaten zur Bestimmung einer vom Fahrer gewünschten Sollroute des Kraftfahrzeugs ausgebildet ist, wobei die Zielposition (31, 41, 42) auf der Sollroute liegt.

3. Kraftfahrzeug nach Anspruch 1 oder 2,
**dadurch gekennzeichnet,**
**dass** das Fahrerassistenzsystem (2) derart zur Bestimmung der Zielposition (31, 41, 42) ausgebildet ist, dass an der Zielposition (31, 41, 42) die prognostizierte Verkehrssituation und/oder ein Streckenverlauf eine sichere Rückübergabe der Fahrzeugführung an den Fahrer erlaubt.

4. Kraftfahrzeug nach einem der vorangehenden Ansprüche,
**dadurch gekennzeichnet,**
**dass** das Fahrerassistenzsystem (2) zum Umschalten vom zweiten in den ersten Betriebsmodus bei Vorliegen wenigstens einer Rückschaltbedingung ausgebildet ist, wobei die oder eine der Rückschaltbedingungen ist, dass die Umschaltbedingung nicht erfüllt ist und/oder dass die Verkehrssituation eine sichere Rückgabe der Fahrzeugkontrolle an den Fahrer erlaubt und/oder dass die Zielposition (31, 41, 42) erreicht ist.

5. Kraftfahrzeug nach einem der vorangehenden Ansprüche ,
**dadurch gekennzeichnet,**
**dass** das Fahrerassistenzsystem (2) zur Bestimmung einer Steuertrajektorie zwischen der momentanen Position des Kraftfahrzeugs (1) und der Zielposition (31, 41, 42) und zur Steuerung des Kraftfahrzeugs (1) entlang der Steuertrajektorie im zweiten Betriebsmodus ausgebildet ist.

6. Kraftfahrzeug nach einem der vorangehenden Ansprüche,
**dadurch gekennzeichnet,**
**dass** das Fahrerassistenzsystem (2) im zweiten Betriebsmodus zur autonomen Steuerung der Bremssysteme (10) und/oder des Motors (11) und/oder der Lenkung (8) und/oder des vorzugsweise automatischen Getriebes (12) des Kraftfahrzeugs ohne Eingriffsmöglichkeit durch den Fahrer ausgebildet ist.

7. Kraftfahrzeug nach einem der vorangehenden Ansprüche,
**dadurch gekennzeichnet,**
**dass** das Fahrerassistenzsystem (2) zur Berechnung von mehreren von der momentanen Position des Kraftfahrzeugs (1) ausgehenden fahrbaren Trajektorien mit wenigstens einer aus Egodaten und/oder Umfelddaten bestimmten Randbedingung ausgebildet ist und dass die Umschaltbedingung zum Auswerten der fahrbaren Trajektorien ausgebildet ist.

8. Kraftfahrzeug nach Anspruch 7,
**dadurch gekennzeichnet,**
**dass** das Fahrerassistenzsystem (2) zur Bestimmung wenigstens eines an der Position des Kraftfahrzeugs (1) beginnenden Fahrbereichs, der durch das Kraftfahrzeug (1) befahrbar ist, ausgebildet ist, wobei die Randbedingung oder eine der Randbedingungen ist, dass die Trajektorien vollständig innerhalb des Fahrbereichs verlaufen.

9. Kraftfahrzeug nach Anspruch 8,
**dadurch gekennzeichnet,**
**dass** das Fahrerassistenzsystem (2) zu der Berechnung der fahrbaren Trajektorien als wenigstens eine parametrisierte Trajektorienschar aus einer Vielzahl von fahrbaren Trajektorien und/oder als mehrere einzelne fahrbare Trajektorien, die durch einen vorgegebenen oder anpassbaren Abstand ihrer Parameter, insbesondere der Ortskoordinaten, beabstandet sind, ausgebildet ist.

10. Kraftfahrzeug nach einem der Ansprüche 7 bis 9,
**dadurch gekennzeichnet,**
**dass** das Fahrerassistenzsystem (2) zur Bestimmung wenigstens eines Geschwindigkeitsprofils für jede der fahrbaren Trajektorien ausgebildet ist.

11. Kraftfahrzeug nach einem der Ansprüche 7 bis 10,
**dadurch gekennzeichnet,**
**dass** das Fahrerassistenzsystem zur Bestimmung eines Grenzwertes für einen Fahrzeugparameter aus den fahrbaren Trajektorien ausgebildet ist und die Umschaltbedingung oder eine der Umschaltbedingungen das Über- oder Unterschreiten des Grenzwertes ist.

12. Kraftfahrzeug nach einem der Ansprüche 7 bis 11,
**dadurch gekennzeichnet,**
**dass** die Umschaltbedingung oder eine der Umschaltbedingungen ein Unterschreiten eines Minimalwerts für die Anzahl der fahrbaren Trajektorien oder einer Breite eines Wertebereichs wenigstens eines Parameters, der eine Trajektorienschar der fahrbaren Trajektorien parametrisiert, ist.

13. Kraftfahrzeug nach einem der Ansprüche 7 bis 12,
**dadurch gekennzeichnet,**
**dass** das Fahrerassistenzsystem (2) dazu ausgebildet ist, in dem Fall, wenn keine fahrbare Trajektorie ermittelt werden kann, wenigstens eine Randbedingung anzupassen und fahrbare Trajektorien erneut zu berechnen.

14. Kraftfahrzeug nach einem der Ansprüche 7 bis 13,
**dadurch gekennzeichnet,**
**dass** das Fahrerassistenzsystem (2) dazu ausgebildet ist, in dem Fall, wenn, insbesondere nach Anpassen der Randbedingung, keine fahrbare Trajektorie ermittelt werden kann, in einen dritten Betriebsmodus umzuschlaten, in dem eine Notfalltrajektorie bestimmt wird.

15. Kraftfahrzeug nach einem der vorangehenden Ansprüche,
**dadurch gekennzeichnet,**
**dass** das Fahrerassistenzsystem (2) zum Ansteuern einer Hinweiseinrichtung (15) zur Gabe eines akustischen, haptischen und/oder optischen Hinweises beim Umschalten in den zweiten Betriebsmodus und/oder vor Umschalten in den ersten Betriebsmodus, als Hinweis zur Fahrerübernahme, ausgebildet ist.

16. Kraftfahrzeug nach einem der vorangehenden Ansprüche,
**dadurch gekennzeichnet,**
**dass** es eine Kommunikationseinrichtung (6) zur drahtlosen Fahrzeugzu-Fahrzeugkommunikation und/oder zur drahtlosen Fahrzeug-zu-Infrastrukturkommunikation aufweist, wobei das Fahrassistenzsystem (2) zur Ermittlung von Umgebungsdaten durch Ansteuerung der Kommunikationseinrichtung (15) zur Kommunikation mit Informationsquellen und/oder zur Kommunikation mit anderen Kraftfahrzeugen (27, 29, 37, 43, 44, 56, 57, 58, 59, 60) zur Übertragung von Warnhinweisen, insbesondere beim Umschalten in den zweiten Betriebsmodus, ausgebildet ist.

17. Kraftfahrzeug nach einem der vorangehenden Ansprüche,
**dadurch gekennzeichnet,**
**dass** das Fahrerassistenzsystem (2) in einem vierten Betriebsmodus zur autonomen Steuerung der Lenkung (8) und/oder der Bremssysteme (10) und/oder des Motors (11) und/oder des insbesondere automatischen Getriebes (12) des Kraftfahrzeugs (1) ohne Eingriffsmöglichkeit durch den Fahrer ausgebildet ist, und das Kraftfahrzeug (1) in eine sichere Abstellposition verbracht wird.

18. Kraftfahrzeug nach Anspruch 17,
**dadurch gekennzeichnet,**
**dass** es ein Fahrerzustandserfassungsmittel (17) zur Erfassung eines Fahrerzustands umfasst und das Fahrerassistenzsystem (2) bei Ermittlung eines Fahrerzustandes, der eine Fahruntüchtigkeit des Fahrers anzeigt, zum Umschalten in den vierten Betriebsmodus ausgebildet ist.

19. Kraftfahrzeug nach einem der Ansprüche 17 oder 18,
**dadurch gekennzeichnet,**
**dass** das Fahrerassistenzsystem (2) bei einem Umschalten vom zweiten Betriebsmodus in den ersten Betriebsmodus zum Warten auf eine Eingabe eines Fahrers zur Fahrerübernahme und bei Nichterfolgen dieser Eingabe innerhalb eines vorgegebenen Zeitintervalls zum Umschallten in den vierten Betriebsmodus ausgebildet ist.

20. Kraftfahrzeug nach einem der Ansprüche 17 bis 19,
**dadurch gekennzeichnet,**
**dass** das Fahrerassistenzsystem (2) dazu ausgebildet ist, bei Ermittlung einer vorgegebenen Mindestzahl und/oder bei Ermittlung einer vorgegebenen Mindesthäufigkeit von Umschaltungen vom ersten in den zweiten Betriebsmodus innerhalb eines vorgegebenen Zeitraums in den vierten Betriebsmodus umzuschalten.

21. Kraftfahrzeug nach einem der Ansprüche 17 bis 20,
**dadurch gekennzeichnet,**
**dass** das Kraftfahrzeug (1) eine Kommunikationseinrichtung (6) umfasst und das Fahrerassistenzsystem (2) im vierten Betriebsmodus zur Ermittlung eines Sollfahrmanövers für wenigstens ein weiteres Kraftfahrzeug (27, 29, 37, 43, 44, 56, 57, 58, 59, 60) und zur Ansteuerung der Kommunikationseinrichtung (6) zur Übertragung des Sollfahrmanövers an das Kraftfahrzeug (27, 29, 37, 43, 44, 56, 57, 58, 59, 60) ausgebildet ist, wobei insbesondere zusätzlich zum Sollfahrmanöver eine Prioritätsinformation übertragbar ist.

22. Kraftfahrzeug nach einem der vorangehenden Ansprüche,
**dadurch gekennzeichnet,**
**dass** die Umschaltbedingung und/oder die Randbedingung zur Berechnung der fahrbaren Trajektorien und/oder die Bestimmung der Steuertrajektorie von einer vorgegebenen oder durch das Fahrerassistenzsystem (2) ermittelten Eigenschaft des Fahrers abhängig ist.

23. Verfahren zur Steuerung eines Kraftfahrzeugs, umfassend wenigstens ein Fahrerassistenzsystem und wenigstens ein Erfassungsmittel, wobei das Kraftfahrzeug in einem ersten Betriebsmodus des Fahrerassistenzsystems durch einen Fahrer steuerbar ist, umfassend die Schritte:
- Erfassen von das Kraftfahrzeug betreffenden Egodaten und das Kraftfahrzeugumfeld betreffenden Umfelddaten durch das Erfassungsmittel,
- Vorausberechnen zukünftiger Fahrsituationen des Kraftfahrzeugs durch Auswertung der Egodaten und der Umfelddaten durch das Fahrerassistenzsystem,
- Überprüfen, ob eine zumindest von den zukünftigen Fahrsituationen abhängige Umschaltbedingung erfüllt ist, durch das Fahrerassistenzsystem,
- temporäreres Umschalten in den zweiten Betriebsmodus des Fahrerassistenzsystems, falls die Umschaltbedingung erfüllt ist,
- autonomes Steuern des Kraftfahrzeugs ohne Eingriffsmöglichkeit des Fahrers zur Fortsetzung des Fahrbetriebs durch das Fahrerassistenzsystem im zweiten Betriebsmodus, wobei durch das Fahrerassistenzsystem im zweiten Betriebsmodus eine Prognose berechnet wird, ob an einem in Fahrtrichtung voraus liegenden Wegpunkt die Umschaltbedingung erfüllt ist, und eine Zielposition für den automatischen Fahrbetrieb bestimmt wird, an der die Umschaltbedingung voraussichtlich nicht erfüllt ist.

## Claims

1. Motor vehicle comprising at least one driver assistance system (2) configured to calculate in advance future driving situations of the motor vehicle (1) for a specified time interval by evaluating ego data relating the motor vehicle (1) and environmental data relating to the motor vehicle's surroundings, wherein the motor vehicle (1) can be controlled by a driver in a first operating mode of the driver assistance system (2),
**characterised in that**
the driver assistance system (2) is configured, on fulfilment of a switchover condition depending at least on the future driving situations, to switch over temporarily into a second operating mode in which the motor vehicle (1) in which the vehicle is controlled autonomously by the driver assistance system (2) without the possibility of intervention by the driver, wherein the driving of the vehicle is continued in the second operating mode, wherein the driver assistance system (2) is configured in the second operating mode to calculate a prediction as to whether the switchover condition is fulfilled at a waypoint lying ahead in the direction of travel and to determine a target position (31, 41, 42) for the autonomous driving mode at which the switchover condition is anticipated not to be fulfilled.

2. Motor vehicle according to claim 1,
**characterised in that**
the driver assistance system (2) is configured to evaluate ego data, in particular route data of a navigation system (4), and environmental data in order to determine an intended route of the motor vehicle desired by the driver, wherein the target position (31, 41, 42) lies on the intended route.

3. Motor vehicle according to claim 1 or 2,
**characterised in that**
the driver assistance system (2) is configured to determine the target positron (31, 41, 42) such that, at the target position (31, 41, 42), the predicted traffic situation and/or a particular section of road permits a safe handover of control of the vehicle back to the driver.

4. Motor vehicle according to any one of the preceding claims,
**characterised in that**
the driver assistance system (2) is configured to switch over from the second into the first operating mode on fulfilment of at least one handback condition, wherein the handback condition, or one of the handback conditions, is that the switchover condition is not fulfilled and/or that the traffic situation permits a safe handback of control of the vehicle to the driver and/or that the target position (31, 41, 42) has been reached.

5. Motor vehicle according to any one of the preceding claims,
**characterised in that**
the driver assistance system (2) is configured to determine a steering trajectory between the current position of the motor vehicle (1) and the target position (31, 41, 42) and to steer the motor vehicle (1) along the steering trajectory in the second operating mode.

6. Motor vehicle according to any one of the preceding claims,
**characterised in that**
the driver assistance system (2) is configured, in the second operating mode, for the autonomous control of the braking system (10) and/or of the engine (11) and/or of the steering (8) and/or of the preferably automatic transmission (12) of the motor vehicle without the possibility of intervention by the driver.

7. Motor vehicle according to any one of the preceding claims,
**characterised in that**
the driver assistance system (2) is configured to calculate several drivable trajectories, starting out from the current position of the motor vehicle (1), with at least one boundary condition determined from ego data and/or environmental data, and that the switchover condition is defined in order to evaluate the drivable trajectories.

8. Motor vehicle according to claim 7,
**characterised in that**
the driver assistance system (2) is configured to determine at least one driving area, beginning at the position of the motor vehicle (1), through which the motor vehicle (1) can be driven, wherein the boundary condition or one of the boundary conditions is that the trajectories run completely within the driving area.

9. Motor vehicle according to claim 8,
**characterised in that**
the driver assistance system (2) is configured to calculate the drivable trajectories as at least one parameterised trajectory cluster consisting of multiple drivable trajectories and/or as several individual drivable trajectories which are spaced apart through a specified or adjustable spacing of their parameters, in particular the spatial coordinates.

10. Motor vehicle according to any one of claims 7 to 9,
**characterised in that**
the driver assistance system (2) is configured to determine at least one speed profile for each of the drivable trajectories.

11. Motor vehicle according to any one of claims 7 to 10,
**characterised in that**
the driver assistance system is configured to determine a limit value for a vehicle parameter from the drivable trajectories and the switchover condition or one of the switchover conditions is the exceeding or shortfall of the limit value.

12. Motor vehicle according to any one of claims 7 to 11,
**characterised in that**
the switchover condition or any one of switchover conditions is a shortfall of a minimum value for the number of drivable trajectories or a width of a value range of at least one parameter which parameterises a trajectory cluster of the drivable trajectories.

13. Motor vehicle according to any one of claims 7 to 12,
**characterised in that**
the driver assistance system (2) is be configured, if no drivable trajectory can be determined, to adjust at least one boundary condition and recalculate drivable trajectories.

14. Motor vehicle according to any one of claims 7 to 13,
**characterised in that**
the driver assistance system (2) is configured, if no drivable trajectory can be determined, in particular after adjusting the boundary condition, to switch into a third operating mode in which an emergency trajectory is determined.

15. Motor vehicle according to any one of the preceding claims,
**characterised in that**
the driver assistance system (2) is configured to actuate an indicating system (15) which generates an acoustic, haptic and/or visual indication on switching over into the second operating mode and/or before switching over into the first operating mode, as an indication that the driver should take over.

16. Motor vehicle according to any one of the preceding claims,
**characterised in that**
it is equipped with a communication device (6) for wireless vehicle-to-vehicle communication and/or for wireless vehicle-to-infrastructure communication, wherein the driver assistance system (2) is configured to collect environmental data through actuation of the communication device (15) for communication with information sources and/or for communication with other motor vehicles (27, 29, 37, 43, 44, 56, 57, 58, 59, 60) in order to transmit warning messages, in particular on switching over into the second operating mode.

17. Motor vehicle according to any one of the preceding claims,
**characterised in that**
the driver assistance system (2) is configured, in a fourth operating mode, for autonomous control of the steering (8) and/or of the braking system (10) and/or of the engine (11) and/or of the in particular automatic transmission (12) of the motor vehicle (1) without the possibility of intervention by the driver, and the motor vehicle (1) brought into a safe parking position.

18. Motor vehicle according to claim 17,
**characterised in that**
it is equipped with a driver condition determination means (17) for determining a condition of the driver, and the driver assistance system (2) is configured, on determining a condition of the driver which indicates that the driver is unfit to drive, to switch over into the fourth operating mode.

19. Motor vehicle according to any one of claims 17 or 18,
**characterised in that**
the driver assistance system (2) is configured, on switching over from the second operating mode into the first operating mode, to wait for an input by a driver indicating that they have taken over control, and in the event of such an input not being received within a specified time interval, to switch over into the fourth operating mode.

20. Motor vehicle according to any one of claims 17 to 19,
**characterised in that**
the driver assistance system (2) is configured to switch over into the fourth operating mode on determining a specified minimum number and/or on determining a specified minimum frequency of switchovers from the first operating mode into the second operating mode within a specified period of time.

21. Motor vehicle according to any one of claims 17 to 20,
**characterised in that**
the motor vehicle (1) is equipped with a communication device (6) and the driver assistance system (2) is configured, in the fourth operating mode, to determine a requested driving manoeuvre for at least one other motor vehicle (27, 29, 37, 43, 44, 56, 57, 58, 59, 60) and to actuate the communication device (6) to transmit the requested driving manoeuvre to the motor vehicle (27, 29, 37, 43, 44, 56, 57, 58, 59, 60), wherein in particular a priority alert can be transmitted in addition to the requested driving manoeuvre.

22. Motor vehicle according to any one of the preceding claims,
**characterised in that**
the switchover condition and/or the boundary condition for calculating the drivable trajectories and/or the determination of the steering trajectory is dependent on a characteristic of the driver which is specified or determined by the driver assistance system (2).

23. Method for controlling a motor vehicle comprising at least one driver assistance system and at least one data collection means, wherein in a first operating mode of the driver assistance system the motor vehicle can be controlled by a driver, comprising the steps:
- collecting ego data relating to the motor vehicle and environmental data relating to the motor vehicle's surroundings by means of the data collection means,
- predicting future driving situations of the motor vehicle through evaluation of the ego data and the environmental data by the driver assistance system,
- checking by the driver assistance system whether a switchover condition dependent at least on the future driving situations is fulfilled,
- temporary switchover into the second operating mode of the driver assistance system if the switchover condition is fulfilled,
- autonomously controlling the motor vehicle without any possibility of intervention by the driver in order to allow the driver assistance system to continue driving the vehicle in the second operating mode, wherein in the second operating mode the driver assistance system calculates a prediction as to whether the switchover condition is fulfilled at a waypoint lying ahead in the direction of travel and determines a target position for the autonomous driving mode at which the switchover condition is anticipated not to be fulfilled.

## Revendications

1. Véhicule automobile comprenant au moins un système d'assistance au conducteur (2) pour calculer à l'avance des situations de conduite futures du véhicule automobile (1) pendant un intervalle de temps prédéterminé par évaluation de données personnelles concernant le véhicule automobile (1) et de données environnementales concernant l'environnement du véhicule automobile, dans lequel le véhicule automobile (1) peut être commandé par un conducteur dans un premier mode de fonctionnement du système d'assistance au conducteur (2),
**caractérisé en ce que** :
le système d'assistance au conducteur (2) est conçu, lorsqu'une condition de commutation dépendant au moins des situations de conduite futures est satisfaite, pour commuter temporairement dans un deuxième mode de fonctionnement, dans lequel la commande du véhicule automobile (1) se fait de manière autonome sans possibilité d'intervention du conducteur par le système d'assistance au conducteur (2), dans lequel la conduite est poursuivie dans le deuxième mode de fonctionnement, dans lequel le système d'assistance au conducteur (2) est conçu de manière à calculer dans le deuxième mode de fonctionnement un pronostic indiquant que la condition de commutation est satisfaite en un point de la route se trouvant à l'avant dans la direction de conduite et à déterminer une position cible (31, 41, 42) pour la conduite autonome, dans laquelle la condition de commutation n'est pas satisfaite en toute probabilité.

2. Véhicule automobile selon la revendication 1,
**caractérisé en ce que** :
le système d'assistance au conducteur (2) est conçu pour évaluer des données personnelles, en particulier des données de routage d'un système de navigation (4), et des données environnementales pour déterminer une route théorique du véhicule automobile souhaitée par le conducteur, dans lequel la position cible (31, 41, 42) se trouve sur la route théorique.

3. Véhicule automobile selon la revendication 1 ou 2,
**caractérisé en ce que** :
le système d'assistance au conducteur (2) est conçu pour déterminer la position cible (31, 41, 42) de sorte que, dans la position cible (31, 41, 42), la situation de trafic pronostiquée et/ou un itinéraire permet ou permettent une reprise en main sûre de la conduite du véhicule au conducteur.

4. Véhicule automobile selon l'une quelconque des revendications précédentes, **caractérisé en ce que** :
le système d'assistance au conducteur (2) est conçu pour passer du deuxième au premier mode de fonctionnement lors de la présence d'au moins une condition de rétrogradation, dans lequel la ou une des conditions de rétrogradation est que la condition de commutation n'est pas satisfaite et/ou que la situation du trafic permet une reprise en main sûre du contrôle du véhicule au conducteur et/ou que la position cible (31, 41, 42) est atteinte.

5. Véhicule automobile selon l'une quelconque des revendications précédentes, **caractérisé en ce que** :
le système d'assistance au conducteur (2) est conçu pour déterminer une trajectoire de commande entre la position momentanée du véhicule automobile (1) et la position cible (31, 41, 42) et pour commander le véhicule automobile (1) le long de la trajectoire de commande dans le deuxième mode de fonctionnement.

6. Véhicule automobile selon l'une quelconque des revendications précédentes, **caractérisé en ce que** :
le système d'assistance au conducteur (2) est conçu dans le deuxième mode de fonctionnement pour commander de manière autonome le système de frein (10) et/ou le moteur (11) et/ou la direction (8) et/ou la transmission de préférence automatique (12) du véhicule automobile sans possibilité d'intervention du conducteur.

7. Véhicule automobile selon l'une quelconque des revendications précédentes, **caractérisé en ce que** :
le système d'assistance au conducteur (2) est conçu pour calculer plusieurs des trajectoires praticables en partant de la position momentanée du véhicule automobile (1) avec au moins une condition marginale déterminée à partir de données personnelles et/ou de données environnementales et la condition de commutation est conçue pour évaluer les trajectoires praticables.

8. Véhicule automobile selon la revendication 7,
**caractérisé en ce que** :
le système d'assistance au conducteur (2) est conçu pour déterminer au moins un rayon d'action commençant dans la position du véhicule automobile (1), qui est praticable par le véhicule automobile (1), dans lequel la condition marginale ou l'une des conditions marginales est que les trajectoires se situent complètement à l'intérieur du rayon d'action.

9. Véhicule automobile selon la revendication 8,
**caractérisé en ce que** :
le système d'assistance au conducteur (2) est conçu pour calculer les trajectoires praticables sous la forme d'au moins un ensemble de trajectoires paramétrisé constitué d'une pluralité de trajectoires praticables et/ou sous la forme de plusieurs trajectoires praticables individuelles, qui se distinguent par un écart prédéterminé ou adaptable de leurs paramètres, en particulier des coordonnées locales.

10. Véhicule automobile selon l'une quelconque des revendications 7 à 9,
**caractérisé en ce que** :
le système d'assistance au conducteur (2) est conçu pour déterminer au moins un profil de vitesse pour chacune des trajectoires praticables.

11. Véhicule automobile selon l'une quelconque des revendications 7 à 10,
**caractérisé en ce que** :
le système d'assistance au conducteur est conçu pour déterminer une valeur limite pour un paramètre du véhicule à partir des trajectoires praticables et la condition de commutation ou l'une des conditions de commutation est le dépassement ou le sous-dépassement de la valeur limite.

12. Véhicule automobile selon l'une quelconque des revendications 7 à 11, **caractérisé en ce que** :
la condition de commutation ou l'une des conditions de commutation est un sous-dépassement d'une valeur minimale pour le nombre des trajectoires praticables ou d'une largeur d'une plage de valeurs d'au moins un paramètre qui paramétrise un ensemble des trajectoires praticables.

13. Véhicule automobile selon l'une quelconque des revendications 7 à 12, **caractérisé en ce que** :
le système d'assistance au conducteur (2) est conçu, dans le cas où aucune trajectoire praticable ne peut être déterminée, pour adapter au moins une condition marginale et calculer à nouveau des trajectoires praticables.

14. Véhicule automobile selon l'une quelconque des revendications 7 à 13, **caractérisé en ce que** :
le système d'assistance au conducteur (2) est conçu, dans le cas où, en particulier après adaptation de la condition marginale, aucune trajectoire praticable en peut être déterminée, pour commuter dans un troisième mode de fonctionnement, dans lequel une trajectoire d'urgence est déterminée.

15. Véhicule automobile selon l'une quelconque des revendications précédentes, **caractérisé en ce que** :
le système d'assistance au conducteur (2) est conçu pour commander un dispositif indicateur (15) pour délivrer une indication acoustique, haptique et/ou optique lors de la commutation dans le deuxième mode de fonctionnement et/ou avant commutation dans le premier mode de fonctionnement, comme indication à prendre en charge par le conducteur.

16. Véhicule automobile selon l'une quelconque des revendications précédentes, **caractérisé en ce que** :
il présente un dispositif de communication (6) pour la communication sans fil de véhicule à véhicule et/ou pour la communication sans fil du véhicule à l'infrastructure, dans lequel le système d'assistance au conducteur (2) est conçu pour déterminer des données environnementales par commande du dispositif de communication (15) afin de communiquer avec des sources d'information et/ou pour communiquer avec d'autres véhicules automobiles (27, 29, 37, 43, 44, 56, 57, 58, 59, 60) pour transférer des indications d'avertissement, en particulier lors de la commutation dans le deuxième mode de fonctionnement.

17. Véhicule automobile selon l'une quelconque des revendications précédentes, **caractérisé en ce que** :
le système d'assistance au conducteur (2) est conçu dans un quatrième mode de fonctionnement pour commander de manière autonome la direction (8) et/ou le système de frein (10) et/ou le moteur (11) et/ou la transmission en particulier automatique (12) du véhicule automobile (1) sans possibilité d'intervention du conducteur et le véhicule automobile (1) est amené en position d'arrêt sûre.

18. Véhicule automobile selon la revendication 17,
**caractérisé en ce que** :
il comprend un moyen d'enregistrement (17) de la situation du conducteur pour enregistrer une situation du conducteur et le système d'assistance au conducteur (2) est conçu lors de la détermination d'une situation du conducteur, qui affiche une incapacité de conduite du conducteur, pour se commuter dans le quatrième mode de fonctionnement.

19. Véhicule automobile selon l'une quelconque des revendications 17 ou 18, **caractérisé en ce que** :
le système d'assistance au conducteur (2) est conçu, lors d'une commutation du deuxième mode de fonctionnement au premier mode de fonctionnement, pour attendre une entrée d'un conducteur pour la prise en charge du conducteur et, si cette entrée ne se produit pas dans un intervalle de temps prédéterminé, pour se commuter dans le quatrième mode de fonctionnement.

20. Véhicule automobile selon l'une quelconque des revendications 17 à 19, **caractérisé en ce que** :
le système d'assistance au conducteur (2) est conçu, lors de la détermination d'un chiffre minimum prédéterminé et/ou lors de la détermination d'une fréquence minimale prédéterminée de commutations du premier au deuxième mode de fonctionnement dans un intervalle de temps prédéterminé, pour se commuter dans le quatrième mode de fonctionnement.

21. Véhicule automobile selon l'une quelconque des revendications 17 à 20, **caractérisé en ce que** :
le véhicule automobile (1) comprend un dispositif de communication (6) et le système d'assistance au conducteur (2) dans le quatrième mode de fonctionnement est conçu pour déterminer une manoeuvre de conduite théorique pour au moins un autre véhicule automobile (27, 29, 37, 43, 44, 56, 57, 58, 59, 60) et pour commander le dispositif de communication (6) afin de transférer la manoeuvre de conduite théorique au véhicule (27, 29, 37, 43, 44, 56, 57, 58, 59, 60), dans lequel en particulier en plus de la manoeuvre de conduite théorique, une information de priorité peut être transmise.

22. Véhicule automobile selon l'une quelconque des revendications précédentes, **caractérisé en ce que** :
la condition de commutation et/ou la condition marginale pour la calcul des trajectoires praticables et/ou la détermination de la trajectoire de commande dépend(ent) d'une propriété du conducteur prédéterminée ou déterminée par le système d'assistance au conducteur (2).

23. Procédé de commande d'un véhicule automobile, comprenant au moins un système d'assistance au conducteur et au moins un moyen d'enregistrement, dans lequel le véhicule automobile peut être commandé par un conducteur dans un premier mode de fonctionnement du système d'assistance au conducteur, comprenant les étapes consistant à :
- enregistrer des données personnelles concernant le véhicule automobile et des données environnementales concernant l'environnement du véhicule automobile par le moyen d'enregistrement,
- calculer à l'avance des situations de conduite futures du véhicule automobile par évaluation des données personnelles et des données environnementales par le système d'assistance au conducteur,
- vérifier si une condition de commutation dépendant au moins des situations de conduite futures est satisfaite, par le système d'assistance au conducteur,
- se commuter temporairement dans le deuxième mode de fonctionnement du système d'assistance au conducteur, au cas où la condition de commutation est satisfaite,
- commander de manière autonome le véhicule automobile sans possibilité d'intervention du conducteur pour poursuivre la conduite par le système d'assistance au conducteur dans le deuxième mode de fonctionnement, dans lequel le système d'assistance au conducteur calcule dans le deuxième mode de fonctionnement un pronostic indiquant si, en un point de la route se trouvant à l'avant dans la direction de conduite, la condition de commutation est satisfaite et l'on détermine pour la conduite automatique une position cible dans laquelle la condition de commutation n'est pas satisfaite de toute probabilité.
